# EUROPEAN PATENT APPLICATION

(11) **EP 4 815 559 A1**
(43) Date of publication of application: **30.09.2026**
(21) Application number: 24906256.3
(22) Date of filing: 13.12.2024
(51) Int. Cl.: H04W 36/00

(54) **COMMUNICATION METHOD AND APPARATUS, READABLE STORAGE MEDIUM, AND COMPUTER PROGRAM PRODUCT**

(30) Priority: 21.12.2023 CN 202311766728
(71) Applicant: Huawei Technologies Co., Ltd., Shenzhen, Guangdong 518129 (CN)
(72) Inventor: WANG, Yu, Shenzhen, Guangdong 518129 (CN); LUO, Hejia, Shenzhen, Guangdong 518129 (CN); WANG, Xiaolu, Shenzhen, Guangdong 518129 (CN); YU, Tianhang, Shenzhen, Guangdong 518129 (CN)
(74) Representative: Isarpatent
(86) International application number: PCT/CN2024/139152
(87) International publication number: WO 2025/130775

(57) **Abstract**

A communication method and apparatus, a readable storage medium, and a computer program product are provided, to balance network load and improve communication quality. In this application, a source network apparatus sends first information to a first target network apparatus. The first information is used to request to hand over a terminal apparatus from the source network apparatus to the first target network apparatus. The first information includes indication information of a first resource. The first resource is used by a relay network apparatus to transmit information associated with a handover process. Because the source network apparatus configures a resource for the relay network apparatus, and the resource is used by the relay network apparatus to transmit the information associated with the handover process, resources used by the relay network apparatus to transmit information associated with the terminal apparatus may be dispersed rather than excessively centralized. In this way, network load can be balanced, and a peak value of the network load can be reduced, thereby improving communication quality.

## Description

### CROSS-REFERENCE TO RELATED APPLICATIONS

This application claims priority to Chinese Patent Application No. 202311766728.0, filed with the China National Intellectual Property Administration on December 21, 2023 and entitled "COMMUNICATION METHOD AND APPARATUS, READABLE STORAGE MEDIUM, AND COMPUTER PROGRAM PRODUCT", which is incorporated herein by reference in its entirety.

### TECHNICAL FIELD

This application relates to the satellite communication field, and in particular, to a communication method and apparatus, a readable storage medium, and a computer program product.

### BACKGROUND

Currently, the 5th generation mobile network (the 5th generation, 5G) new radio (new radio, NR) technology is evolving from Release 18 to Release 19. In addition, the NR technology has moved from the standardization phase to the commercial deployment phase. The NR standard protocol may be a wireless communication technology designed for terrestrial cellular network scenarios, and can provide users with wireless communication services featuring ultra-low latency, ultra-reliability, ultra-high rate, and massive connectivity. In comparison with terrestrial communication, non-terrestrial network (non-terrestrial network, NTN) communication has features such as large coverage and flexible networking, and can achieve seamless global network coverage. The NTN communication includes networking by using devices such as uncrewed aerial vehicles, high altitude platforms, and satellites, to provide services such as data transmission and voice communication for user equipment (user equipment, UE).

With the development of NTN, a scale of a satellite network is increasingly large. For example, the satellite network has developed from 66 satellites in the Iridium constellation to 720 satellites in the OneWeb constellation, and has extended to more than 12,000 satellites in the Starlink (Starlink) ultra-dense low earth orbit (low earth orbit, LEO) satellite constellation.

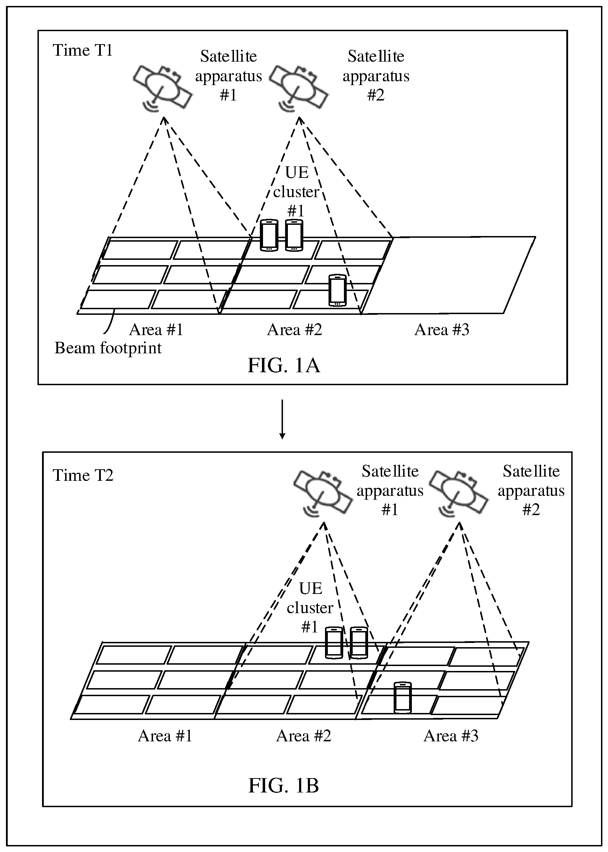

In a satellite communication system, movement of a satellite apparatus may cause group handover (for UEs in a connected state) or group reselection (for UEs in an idle state) to users in an area. FIG. 1A and FIG. 1B illustrate a satellite communication scenario. In FIG. 1A and FIG. 1B, three areas are used as an example for illustration, namely an area #1, an area #2, and an area #3. Each area may be divided into one or more beam footprints. In FIG. 1A and FIG. 1B, one rectangular box represents one beam footprint. UEs in one beam footprint are referred to as a UE cluster, and one UE cluster includes one or more UEs. Refer to FIG. 1A. At a time T1, a satellite apparatus #1 provides a service for UEs in the area #1, a satellite apparatus #2 provides a service for UEs in the area #2, and UEs in a UE cluster #1 are served by the satellite apparatus #2. A time T2 is a time after the time T1. FIG. 1B shows locations of each satellite apparatus and UE at the time T2. It can be learned from FIG. 1B that, at the time T2, because the satellite apparatus #1 and the satellite apparatus #2 move, the satellite apparatus #2 can no longer provide a service for a beam footprint in which the UE cluster #1 is located, and instead, the satellite apparatus #1 replaces the satellite apparatus #2 to provide a service for the UE cluster #1. As a result, group handover occurs in the UEs in the UE cluster #1. In addition, because a satellite moves at a high speed, for example, about 7.5 km/s, group handover occurs at a frequency of approximately once every several seconds to tens of seconds. In other words, in the satellite communication system, the group handover caused by the movement of the satellite apparatus becomes a norm. However, the group handover causes centralized network load. For example, in group handover, a source network apparatus needs to transmit, to a target network apparatus via a relay network apparatus, related information of all terminal apparatuses in which group handover occurs. It can be learned that, in a current information transmission solution, network load is centralized, and consequently, the network load even exceeds a network processing capability, and a communication failure (for example, a handover failure or link congestion) may be caused.

### SUMMARY

This application provides a communication method and apparatus, a readable storage medium, and a computer program product, to allocate a resource to a relay network apparatus, where the resource is used to transmit information associated with a handover process. According to this solution, network load can be balanced, and a peak value of the network load can be reduced, thereby reducing a probability of a communication failure and improving communication quality.

In a satellite communication scenario, in a group handover process, terminal apparatuses are basically handed over in a same or similar time period. Therefore, a source network apparatus needs to transmit, to a target network apparatus in a similar or same time, information associated with all terminal apparatuses in which group handover occurs. As a result, an amount of information transmitted between the source network apparatus and the target network apparatus is large, and network load is excessively heavy, which may further cause a communication failure.

In view of this, this application provides an implementation. In a process in which a terminal apparatus is handed over to a network apparatus, a source network apparatus configures a resource for a relay network apparatus, and the resource is used by the relay network apparatus to transmit information associated with a handover process. It can be learned that, in this solution, resources used by the relay network apparatus to transmit information associated with the terminal apparatus may be dispersed, and do not need to be excessively centralized. In this way, network load can be balanced, and a peak value of the network load can be reduced, thereby improving communication quality.

According to a first aspect, this application provides a communication method. The communication method may be performed by a source network apparatus. The source network apparatus may be a network device or a chip (or a chip system) inside the network device.

In this solution, the source network apparatus sends first information to a first target network apparatus. The first information is used to request to hand over a terminal apparatus from the source network apparatus to the first target network apparatus. The first information includes indication information of a first resource. An information transmission path from the source network apparatus to the first target network apparatus includes at least one relay network apparatus, and the first resource is used by a relay network apparatus in the at least one relay network apparatus to transmit information associated with a handover process. The source network apparatus sends second information to the first target network apparatus, where the second information belongs to the information associated with the handover process.

It can be learned that the source network apparatus configures a resource for a relay network apparatus, and the resource is used by the relay network apparatus to transmit the information associated with the handover process. It can be learned that, in this solution, resources used by the relay network apparatus to transmit information associated with the terminal apparatus may be dispersed, and do not need to be excessively centralized. In this way, network load can be balanced, and a peak value of the network load can be reduced, thereby improving communication quality.

In a possible implementation, the indication information of the first resource includes at least one of the following: information indicating a time period; information indicating a bandwidth resource; information indicating a transmission rate; information indicating a quality of service requirement; information indicating quality of service experience; information indicating a location of the relay network apparatus; and information indicating a polarization manner.

It can be learned that there are a plurality of forms of parameters of the resource that can be allocated by the source network apparatus to the relay network apparatus. In this way, flexibility of the solution can be improved.

In a possible implementation, the source network apparatus may allocate a resource to a terminal apparatus based on a type of the terminal apparatus, for example, may allocate a same resource to terminal apparatuses of a same type. For example, the first resource is used to transmit information associated with a handover process of a terminal apparatus of a first type. It may also be understood that the first resource is allocated by the source network apparatus to the terminal apparatus of the first type, and the information associated with the handover process of the terminal apparatus of the first type may be transmitted by using the first resource.

The source network apparatus may classify types of terminal apparatuses based on a plurality of types of information, for example, may classify the types of the terminal apparatuses based on at least one of priorities of the terminal apparatuses, capabilities of the terminal apparatuses, quality of service requirements of the terminal apparatuses, and quality of service experience of the terminal apparatuses. It may also be understood that the terminal apparatus of the first type is associated with at least one of the priorities of the terminal apparatuses, the capabilities of the terminal apparatuses, the quality of service requirements of the terminal apparatuses, and the quality of service experience of the terminal apparatuses.

The types of the terminal apparatuses are classified, then, resources may be allocated to terminal apparatuses of different types based on the types of the terminal apparatuses, and a granularity of resource allocation may be based on the type of the terminal apparatus. In one aspect, the resource allocation granularity is not excessively small, so that the resource allocation amount is not excessively fine, thereby reducing complexity of resource allocation. In another aspect, the resource allocation granularity is not excessively large, so that load balancing can be achieved. In addition, the source network apparatus allocates the resources to the terminal apparatuses based on the types of the terminal apparatuses, so that each allocated resource can better match an actual requirement of the terminal apparatus, thereby ensuring satisfaction of a communication service.

In a possible implementation, the information transmission path from the source network apparatus to the first target network apparatus includes a plurality of relay network apparatuses, the first information includes indication information of a plurality of first resources, the plurality of relay network apparatuses are associated with first resources in the plurality of first resources, and two first resources associated with two of the plurality of relay network apparatuses partially overlap or do not overlap. Because there is a sequence of time for transmitting the first information by the two relay network apparatuses, the source network apparatus may allocate two first resources to different relay network apparatuses, where the two first resources partially or do not overlap. In this solution, a resource allocation manner better matches an actual information transmission status, thereby optimizing overall performance of a communication system.

In a possible implementation, the first information further includes identification information of a relay network apparatus associated with the first resources in the plurality of first resources. In this way, when the source network apparatus separately allocates the first resources to the plurality of relay network apparatuses, each relay network apparatus may identify, based on identification information of the relay network apparatus associated with the first resource, the first resource corresponding to the relay network apparatus.

In a possible implementation, the first information further includes identification information of the first target network apparatus and/or information about a path from the source network apparatus to the first target network apparatus. In this way, when the scenario is applicable to a multi-hop scenario, that is, when at least one relay network apparatus is included between the source network apparatus and the first target network apparatus, the relay network apparatus may determine information about a next hop based on these pieces of information.

In a possible implementation, the first information further includes information about a delay from the source network apparatus to the first target network apparatus. In this way, the relay network apparatus and/or the first target network apparatus can learn of the delay information, thereby establishing a better transmission path, assisting subsequent data transmission based on the information, and further reducing an end-to-end communication delay.

In a possible implementation, the first information may include indication information of a transmission mode. The transmission mode in this embodiment of this application may include a first transmission mode and a second transmission mode. The first transmission mode means that the relay network apparatus performs relay forwarding on information, and needs to obtain part of content of the information. The second transmission mode means that the relay network apparatus performs relay forwarding on the information, but does not need to obtain content in the information.

For example, the first information includes information indicating that a transmission mode of the relay network apparatus for the first information is the first transmission mode. The first transmission mode includes: The relay network apparatus performs relay forwarding on the first information, and obtains the indication information of the first resource in the first information. The relay network apparatus may determine, according to a protocol definition or a negotiated rule, that the content that needs to be obtained in the first information is the indication information of the first resource.

In another possible implementation, the first information further includes information indicating the relay network apparatus in the at least one relay network apparatus to obtain content carried in a first field of the first information, and the first field includes a field used to carry the indication information of the first resource in the first information. According to this solution, the source network apparatus can flexibly indicate information that needs to be obtained by the relay network apparatus, for example, the indication information of the first resource, and other information.

In a possible implementation, the source network apparatus may receive first handover response information from the first target network apparatus. The first handover response information is response information of the first information, the first handover response information includes information indicating that the transmission mode of the relay network apparatus is the second transmission mode, and the second transmission mode indicates that the relay network apparatus performs relay forwarding on the first handover response information. The relay network apparatus may perform relay forwarding on the first handover response information, but does not need to obtain content in the first handover response information.

In a possible implementation, the second information further includes the information indicating that the transmission mode of the relay network apparatus is the second transmission mode, and the second transmission mode indicates that the relay network apparatus performs relay forwarding on the second information. The relay network apparatus may perform relay forwarding on the second information, but does not need to obtain content in the second information. For example, the second information includes a handover (handover, HO) acknowledgement (acknowledgement), a sequence number (sequence number, SN) status transfer (SN status transfer), and/or a context of the terminal apparatus (UE context release).

In a possible implementation, the first information is further used to request to hand over the terminal apparatus from the source network apparatus to a second target network apparatus, the first information further includes indication information of a second resource, and the second resource is used by the relay network apparatus in the at least one relay network apparatus to transmit the information associated with the handover process to the second target network apparatus. The source network apparatus sends third information to the second target network apparatus, where the third information belongs to the information associated with the handover process. In this way, the relay network apparatus may send the third information on the second resource. According to this solution, the source network apparatus may separately configure resources for different target network apparatuses, and the relay network apparatus sends, on different resources, information associated with a handover process to the different target network apparatuses. In this process, resources occupied by the information sent to the different target network apparatuses may be distinguished, so that network load can be further balanced.

In a possible implementation, the first information further includes: information indicating the second target network apparatus; information indicating an information transmission path from the source network apparatus to the second target network apparatus; and information indicating a relay network apparatus on the information transmission path from the source network apparatus to the second target network apparatus. In this way, the relay network apparatus may determine a next hop of the path between the source network apparatus and the second target network apparatus.

In a possible implementation, the source network apparatus receives second handover response information from the second target network apparatus, where the second handover response information is response information of the first information, the second handover response information includes the information indicating that the transmission mode of the relay network apparatus is the second transmission mode, and the second transmission mode indicates that the relay network apparatus performs relay forwarding on the second handover response information. The relay network apparatus may perform relay forwarding on the second handover response information, but does not need to obtain content in the second handover response information.

In a possible implementation, the first information further includes context information of the terminal apparatus. The first information further includes information indicating that the relay network apparatus in the at least one relay network apparatus needs to obtain the context information of the terminal apparatus from the first information. In this application, the context information of the terminal apparatus may include, for example: at least one of an identifier, an access mode, a status, bearer-related information, security information, capability information, session information, and the like of the terminal apparatus. In this way, the relay network apparatus may obtain the context information of the terminal apparatus. Subsequently, when the terminal apparatus needs to re-establish a link, the relay network apparatus that pre-stores the context information of the terminal apparatus may be used to establish the link. Therefore, a link establishment speed can be accelerated, and duration of a communication failure can be shortened.

In a possible implementation, the first information further includes identification information of a relay network apparatus that needs to obtain the context information of the terminal apparatus. In this way, not every relay network apparatus needs to obtain the context information of the terminal apparatus, so that information stored in the relay network apparatus can be reduced, and occupation of storage space of the relay network apparatus can be reduced.

In a possible implementation, the first resource is associated with at least one of the following: mobility interruption time information of the terminal apparatus; an uplink service arrival rate of the terminal apparatus; a downlink service arrival rate of the terminal apparatus; and a type of the terminal apparatus. The source network apparatus allocates the resource based on the foregoing pieces of information, so that the allocated resource can better match information such as a service of the terminal apparatus. In this way, when the information associated with the handover process corresponding to the terminal apparatus is transmitted by using the resource, the first resource can better match an actual service requirement of the terminal apparatus.

According to a second aspect, this application provides a communication method. The communication method may be performed by a terminal apparatus. The terminal apparatus may be a terminal device or a chip (or a chip system) inside the terminal device.

In this solution, the terminal apparatus may obtain fourth information, where the fourth information includes at least one of a priority of the terminal apparatus, a capability of the terminal apparatus, a quality of service requirement of the terminal apparatus, and quality of service experience of the terminal apparatus. The terminal apparatus may send the fourth information to a source network apparatus, where the fourth information is used by the source network apparatus to determine a first resource, an information transmission path from the source network apparatus to a first target network apparatus includes at least one relay network apparatus, and the first resource is used by a relay network apparatus in the at least one relay network apparatus to transmit information associated with a handover process.

The fourth information may be used to assist the source network apparatus in configuring a resource for a relay network apparatus, and the resource is used by the relay network apparatus to transmit the information associated with the handover process. It can be learned that, in this solution, resources used by the relay network apparatus to transmit information associated with the terminal apparatus may be dispersed, and do not need to be excessively centralized. In this way, network load can be balanced, and a peak value of the network load can be reduced, thereby improving communication quality. In addition, the resource is configured based on the fourth information, and the resource may better match content like an actual service requirement of the terminal apparatus, thereby optimizing overall performance of a communication system.

In a possible implementation, indication information of the first resource includes at least one of the following: information indicating a time period; information indicating a bandwidth resource; information indicating a transmission rate; information indicating a quality of service requirement; information indicating quality of service experience; information indicating a location; and information indicating a polarization manner.

For related content of the first resource, refer to the related description in the first aspect. Details are not described again.

In a possible implementation, the terminal apparatus receives fifth information, where the fifth information indicates a relay network apparatus that stores context information of the terminal apparatus. The terminal apparatus determines, based on the fifth information, an information transmission path between the terminal apparatus and the at least one relay network apparatus. For related content and beneficial effect, refer to the related descriptions in the first aspect. Details are not described again.

According to a third aspect, this application provides a communication method. The communication method may be performed by a relay network apparatus. The relay network apparatus may be a network device or a chip (or a chip system) inside the network device.

The relay network apparatus belongs to at least one relay network apparatus included on an information transmission path from a source network apparatus to a first target network apparatus. The relay network apparatus receives first information from the source network apparatus, where the first information is used to request to hand over a terminal apparatus from the source network apparatus to a first target network apparatus, the first information includes indication information of a first resource, and the first resource is used by the relay network apparatus to transmit information associated with a handover process. The relay network apparatus obtains the indication information of the first resource from the first information. The relay network apparatus sends the first information to the first target network apparatus. The relay network apparatus receives second information from the source network apparatus, where the second information belongs to the information associated with the handover process. The relay network apparatus sends the second information to the first target network apparatus on the first resource.

The source network apparatus configures a resource for the relay network apparatus, and the resource is used by the relay network apparatus to transmit the information associated with the handover process. It can be learned that, in this solution, resources used by the relay network apparatus to transmit information associated with the terminal apparatus may be dispersed, and do not need to be excessively centralized. In this way, network load can be balanced, and a peak value of the network load can be reduced, thereby improving communication quality.

In a possible implementation, for content included in the indication information of the first resource, refer to the related description in the first aspect. Details are not described again.

In a possible implementation, the first resource is used by the relay network apparatus to transmit information associated with a handover process of a terminal apparatus of a first type. The terminal apparatus of the first type is associated with at least one of a priority of the terminal apparatus, a capability of the terminal apparatus, a quality of service requirement of the terminal apparatus, and quality of service experience of the terminal apparatus.

In a possible implementation, the information transmission path from the source network apparatus to the first target network apparatus includes a plurality of relay network apparatuses, the first information includes indication information of a plurality of first resources, the plurality of relay network apparatuses are associated with first resources in the plurality of first resources, and two first resources associated with two of the plurality of relay network apparatuses partially overlap or do not overlap.

In a possible implementation, for content included in the first information, refer to the related description in the first aspect. Details are not described again.

In a possible implementation, the relay network apparatus receives first handover response information from the first target network apparatus. The relay network apparatus sends the first handover response information to the source network apparatus, where the first handover response information is response information of the first information, the first handover response information includes information indicating that a transmission mode of the relay network apparatus is a second transmission mode, and the second transmission mode indicates that the relay network apparatus performs relay forwarding on the first handover response information.

In a possible implementation, for content included in the second information, refer to the related description in the first aspect. Details are not described again.

In a possible implementation, the first information is further used to request to hand over the terminal apparatus from the source network apparatus to a second target network apparatus, the first information further includes indication information of a second resource, and the second resource is used by the relay network apparatus to transmit the information associated with the handover process to the second target network apparatus. The relay network apparatus obtains the indication information of the second resource from the first information. The relay network apparatus receives third information from the source network apparatus. The relay network apparatus sends the third information to the second target network apparatus on the second resource, where the third information belongs to the information associated with the handover process.

In a possible implementation, the relay network apparatus receives second handover response information from the second target network apparatus. The relay network apparatus sends the second handover response information to the source network apparatus, where the second handover response information is response information of the first information, the second handover response information includes the information indicating that the transmission mode of the relay network apparatus is the second transmission mode, and the second transmission mode indicates that the relay network apparatus performs relay forwarding on the second handover response information.

In a possible implementation, the first information further includes context information of the terminal apparatus. The first information further includes information indicating that the relay network apparatus needs to obtain the context information of the terminal apparatus from the first information. The relay network apparatus obtains the context information of the terminal apparatus from the first information.

In a possible implementation, the first information further includes identification information of a relay network apparatus that needs to obtain the context information of the terminal apparatus.

In a possible implementation, the first resource is associated with at least one of the following: mobility interruption time information of the terminal apparatus; an uplink service arrival rate of the terminal apparatus; a downlink service arrival rate of the terminal apparatus; and a type of the terminal apparatus.

In a possible implementation, when determining that a first path cannot be used to send the first information, the relay network apparatus determines a second path, and sends the first information to the first target network apparatus based on the second path. In this solution, when determining that communication through the first path fails, the relay network apparatus can actively switch the path, thereby increasing an information transmission rate.

According to a fourth aspect, this application provides a communication method. The communication method may be performed by a first target network apparatus. The first target network apparatus may be a network device or a chip (or a chip system) inside the network device.

The first target network apparatus receives first information from a source network apparatus. The first information is used to request to hand over a terminal apparatus from the source network apparatus to the first target network apparatus, an information transmission path from the source network apparatus to the first target network apparatus includes at least one relay network apparatus, the first information includes indication information of a first resource, and the first resource is used by a relay network apparatus to transmit information associated with a handover process. The first target network apparatus receives second information from the source network apparatus, where the second information belongs to the information associated with the handover process.

The source network apparatus configures a resource for the relay network apparatus, and the resource is used by the relay network apparatus to transmit the information associated with the handover process. Correspondingly, the first target network apparatus receives, on the corresponding resource, the information associated with the handover process. It can be learned that, in this solution, resources used by the relay network apparatus to transmit information associated with the terminal apparatus may be dispersed, and do not need to be excessively centralized. In this way, network load can be balanced, and a peak value of the network load can be reduced, thereby improving communication quality.

In a possible implementation, the first target network apparatus sends first handover response information to the source network apparatus, where the first handover response information is response information of the first information, the first handover response information includes information indicating that a transmission mode of the relay network apparatus is a second transmission mode, and the second transmission mode indicates that the relay network apparatus performs relay forwarding on the first handover response information.

For related descriptions of the first resource, the first information, and the like, refer to the content in the first aspect. Details are not described again.

According to a fifth aspect, a communication apparatus is provided. The communication apparatus may be the foregoing terminal apparatus, source network apparatus, relay network apparatus, or first target network apparatus. The communication apparatus may include a communication unit and a processing unit, to perform any one of the first aspect to the fourth aspect, or perform any one of the possible implementations of the first aspect to the fourth aspect. The communication unit is configured to perform functions related to sending and receiving. The communication unit may be referred to as a transceiver unit. Optionally, the communication unit includes a receiving unit and a sending unit. In a design, the communication apparatus is a communication chip, the processing unit may be one or more processors or processor cores, and the communication unit may be an input/output circuit, an input/output interface, or an antenna port of the communication chip.

In another design, the communication unit may be a transmitter and a receiver, or the communication unit is a transmitting device and a receiving device.

Optionally, the communication apparatus further includes modules that may be configured to perform any one of the first aspect to the fourth aspect, or perform any one of the possible implementations of the first aspect to the fourth aspect.

According to a sixth aspect, a communication apparatus is provided. The communication apparatus may be the foregoing terminal apparatus, source network apparatus, relay network apparatus, or first target network apparatus. The communication apparatus may include a processor and a memory, to perform any one of the first aspect to the fourth aspect, or perform any one of the possible implementations of the first aspect to the fourth aspect. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the first aspect to the fourth aspect, or perform any one of the possible implementations of the first aspect to the fourth aspect.

Optionally, there are one or more processors, and there are one or more memories.

Optionally, the memory may be integrated with the processor, or the memory and the processor are disposed separately.

Optionally, the transceiver may include a transmitting device (transmitter) and a receiving device (receiver).

According to a seventh aspect, a communication apparatus is provided. The communication apparatus may be the foregoing terminal apparatus, source network apparatus, relay network apparatus, or first target network apparatus. The communication apparatus may include a processor, to perform any one of the first aspect to the fourth aspect, or perform any one of the possible implementations of the first aspect to the fourth aspect. The processor is coupled to a memory. Optionally, the communication apparatus further includes the memory. Optionally, the communication apparatus further includes a communication interface, and the processor is coupled to the communication interface.

In an implementation, when the communication apparatus is the terminal apparatus, the source network apparatus, the relay network apparatus, or the first target network apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an eighth aspect, a system is provided. The system includes the foregoing terminal apparatus.

In a possible implementation, the system may further include a source network apparatus, a relay network apparatus, and a first target network apparatus.

According to a ninth aspect, a computer program product is provided. The computer program product includes a computer program (which may also be referred to as code or instructions). When the computer program is run, a computer is enabled to perform any one of the first aspect to the fourth aspect, or perform any one of the possible implementations of the first aspect to the fourth aspect.

According to a tenth aspect, a computer-readable storage medium is provided. The computer-readable storage medium stores a computer program (which may also be referred to as code or instructions). When the computer program is run on a computer, the computer is enabled to perform any one of the first aspect to the fourth aspect, or perform any one of the possible implementations of the first aspect to the fourth aspect.

According to an eleventh aspect, a processing apparatus is provided, and includes an interface circuit and a processing circuit. The interface circuit may include an input circuit and an output circuit. The processing circuit is configured to: receive a signal through the input circuit, and transmit a signal through the output circuit, so that any one of the first aspect to the fourth aspect or any one of the possible implementations of the first aspect to the fourth aspect is performed.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, the processing apparatus is a terminal apparatus, a source network apparatus, a relay network apparatus, or a first target network apparatus. The interface circuit may be a radio frequency processing chip in the terminal apparatus, the source network apparatus, the relay network apparatus, or the first target network apparatus, and the processing circuit may be a baseband processing chip in the terminal apparatus, the source network apparatus, the relay network apparatus, or the first target network apparatus.

In another implementation, the processing apparatus may be a part of components in a terminal apparatus, a source network apparatus, a relay network apparatus, or a first target network apparatus, for example, an integrated circuit product like a system chip or a communication chip. The interface circuit may be an input/output interface, an interface circuit, an output circuit, an input circuit, a pin, a related circuit, or the like on the chip or a chip system. The processing circuit may be a logic circuit on the chip.

### BRIEF DESCRIPTION OF DRAWINGS

FIG. 1A and FIG. 1B are diagrams of beam coverage of a satellite;
FIG. 2A is a diagram of a network architecture of a communication system to which an embodiment of this application is applicable;
FIG. 2B is a diagram of a network architecture of another communication system to which an embodiment of this application is applicable;
FIG. 3A is a diagram of a possible operating mode of a satellite to which an embodiment of this application is applicable;
FIG. 3B is a diagram of another possible operating mode of a satellite to which an embodiment of this application is applicable;
FIG. 4 is a possible schematic flowchart of a communication method according to an embodiment of this application;
FIG. 5 is a diagram of a structure of first information according to an embodiment of this application;
FIG. 6A and FIG. 6B are a possible schematic flowchart of a communication method according to an embodiment of this application;
FIG. 7A and FIG. 7B are a possible schematic flowchart of a communication method according to an embodiment of this application;
FIG. 8 is a diagram of a possible architecture of a communication system according to an embodiment of this application;
FIG. 9A and FIG. 9B are a possible schematic flowchart of a communication method according to an embodiment of this application;
FIG. 10 is a diagram of a possible architecture of a communication system according to an embodiment of this application;
FIG. 11 is a possible schematic flowchart of a communication method according to an embodiment of this application;
FIG. 12 is a diagram of a possible architecture of a communication system according to an embodiment of this application;
FIG. 13 is a diagram of a possible structure of a communication apparatus according to an embodiment of this application; and
FIG. 14 is a diagram of a possible structure of another communication apparatus according to an embodiment of this application.

### DESCRIPTION OF EMBODIMENTS

The technical solutions of this application may be applied to a non-terrestrial network (non-terrestrial network, NTN) system like a satellite communication system, a high altitude platform (high altitude platform station, HAPS) communication system, or an uncrewed aerial vehicle communication system, for example, an integrated communication and navigation (integrated communication and navigation, IcaN) system, a global navigation satellite system (global navigation satellite system, GNSS), and an ultra-dense low-orbit satellite communication system. The satellite communication system may be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), or a future mobile communication system.

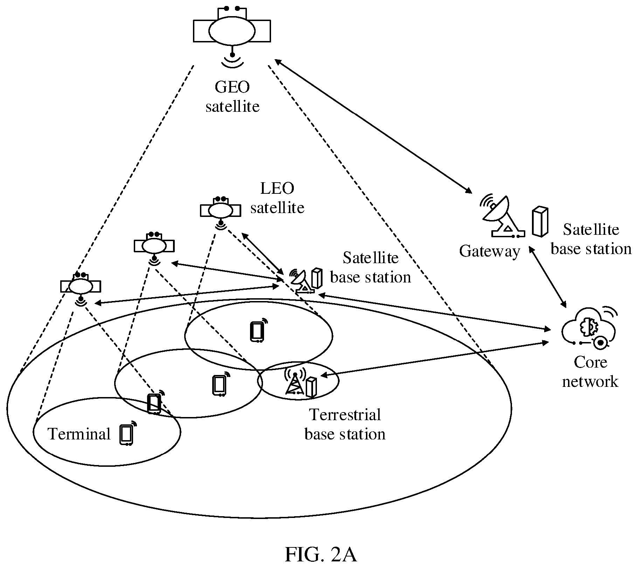

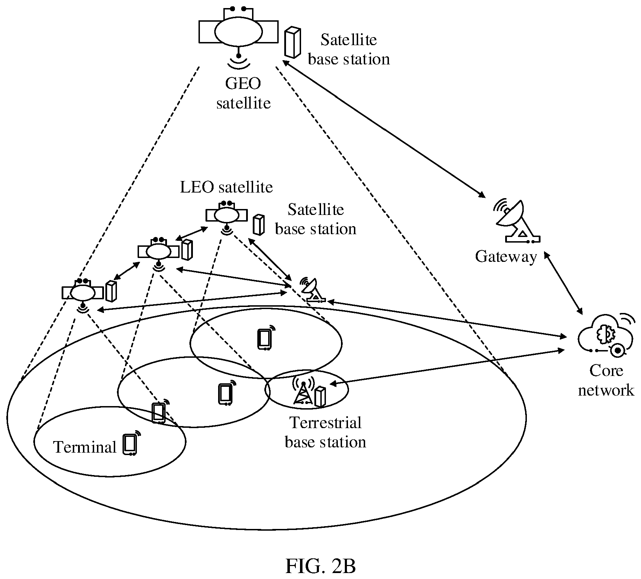

FIG. 2A and FIG. 2B illustrate network architectures of several communication systems to which embodiments of this application are applicable. The communication system may include a satellite, a network device, a terminal device, and the like. The communication system may further include a gateway and a core network device. FIG. 2A and FIG. 2B illustrate integrated network architectures of an NTN and a terrestrial network. The following provides descriptions with reference to the accompanying drawings.

### (1) Satellite

The satellite may be a highly elliptical orbit (highly elliptical orbit, HEO) satellite, a GEO satellite, a medium earth orbit (medium earth orbit, MEO) satellite, and a low earth orbit (low earth orbit, LEO) satellite. An operating mode of the satellite is not limited in embodiments of this application. For example, the operating mode of the satellite may be a transparent (transparent) mode, or may be a regenerative (regenerative) mode, or may be a network controlled repeater (NCR, Network Controlled Repeater). FIG. 2A is shown by using an example in which the operating mode of the satellite is the transparent mode, and FIG. 2B is shown by using an example in which the operating mode of the satellite is the regenerative mode.

When the satellite operates in the transparent (transparent) mode, the satellite has a relay forwarding function. A gateway has a function of a network device (for example, a base station) or a part of functions of a network device (for example, a base station). In this case, the gateway may be considered as the network device (for example, the base station). Alternatively, a network device (for example, a base station) and the gateway may be separately deployed. In this case, a delay of a feeder link includes a delay from the satellite to the gateway and a delay from the gateway to a gNB. In the transparent mode discussed below, a case in which the gateway and the gNB are located together or close to each other is used as an example. If the gateway is far away from the gNB, the delay from the satellite to the gateway and the delay from the gateway to the gNB are added to obtain the delay of the feeder link.

When the satellite operates in the regenerative (regenerative) mode, the satellite has a data processing capability, and has a function of a network device (for example, a base station) or a part of functions of a network device (for example, a base station). In this case, the satellite may be considered as the network device (for example, the base station).

The satellite may perform wireless communication with a terminal by using a broadcast communication signal, a navigation signal, and the like. Optionally, each satellite may provide a communication service, a navigation service, a positioning service, and the like for a terminal device by using a plurality of beams. For example, each satellite uses a plurality of beams to cover a service area, and a relationship between different beams may be one or more of time division, frequency division, and space division. The satellite may further operate in an earth-fixed (earth-fixed) mode, a quasi earth-fixed (quasi earth-fixed) mode, a satellite-fixed (satellite-fixed) mode, or an earth-moving (earth-moving) mode. The earth-fixed mode is usually used for a GEO satellite, and the quasi earth-fixed mode is usually used for an LEO/MEO satellite.

The quasi earth-fixed mode may also be referred to as a gaze mode, and means that a beam direction of the satellite is dynamically adjusted, so that the satellite continuously serves a physical area within a period of time.

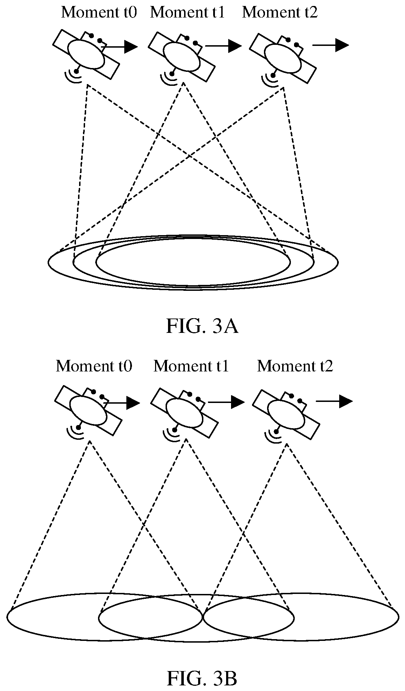

FIG. 3A illustrates a possible operating mode of a satellite. As shown in FIG. 3A, within a period of time (for example, a moment t0, a moment t1, and a moment t2), the satellite dynamically adjusts a beam direction, so that the beam approximately covers a same area on the ground. In practice, due to a problem of precision of a beam direction and a problem of distortion of beam projections at different incident angles on the ground, a coverage area of a gazing beam may have a jitter to some extent in terms of time.

In the satellite-fixed mode, a beam of a satellite moves with the satellite, and a physical area served by the satellite also changes continuously. FIG. 3B illustrates a possible operating mode of a satellite. As shown in FIG. 3B, within a period of time (for example, a moment t0, a moment t1, and a moment t2), coverage of a satellite beam moves with the satellite.

### (2) Gateway

The gateway (also referred to as a ground station, an earth station, a signal gateway station, or a gateway station) (gateway) may be configured to connect a satellite to a terrestrial network device (for example, a terrestrial base station). One or more satellites may be connected to one or more terrestrial network devices (for example, terrestrial base stations) via one or more gateways. This is not limited herein.

A link between the satellite and a terminal is referred to as a service link (service link), and a link between the satellite and the gateway is referred to as a feeder link (feeder link). The network device and the gateway may be separately deployed. In this case, a delay of the feeder link may include a delay from the satellite to the gateway and a delay from the gateway to the network device.

### (3) Network device

The network device in embodiments of this application may include a network device deployed on a satellite (for example, a satellite base station), or may include a network device deployed on a gateway, or may include a network device deployed on the ground (for example, a terrestrial base station).

The network device in embodiments of this application may be a radio access network (radio access network, RAN) node. The RAN may be an evolved universal terrestrial radio access (evolved universal terrestrial radio access, E-UTRA) system, an NR system, and a future radio access system defined in the 3rd generation partnership project (3rd generation partnership project, 3GPP). The RAN may alternatively include the foregoing two or more different radio access systems. The RAN may alternatively be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, or a base station in a future mobile communication system. The RAN node may be a macro base station, or may be a micro base station or an indoor base station, or may be a relay node or a donor node.

In another application scenario, a plurality of RAN nodes may cooperate to help a terminal implement radio access, and different RAN nodes separately implement a part of functions of a base station. For example, the RAN node may be a central unit (central unit, CU), a distributed unit (distributed unit, DU), a radio unit (radio unit, RU), or the like. The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete a part or all of functions of a physical layer. For specific descriptions of the foregoing protocol layers, refer to related technical specifications in 3GPP. The RU may be configured to implement a function of receiving/sending a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes at a CU-control plane and a CU-user plane.

In different systems, the RAN node may have a different name. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server to which a corresponding software module is loaded. A specific technology and a specific device form that are used by the RAN node are not limited in embodiments of this application. For ease of description, the following uses an example in which a base station is used as a RAN node for description.

### (4) Core network (core network, CN) device

The core network device is a device that is disposed on the ground and can communicate with an NTN device in an NTN system. The CN device is a network element included in a CN part in a mobile communication system. The CN device can connect a terminal device to different data networks, and perform services such as authentication, charging, mobility management, session management, policy control, and user plane forwarding. The CN device may be a CN device in a current mobile communication system (for example, a 5^{th} generation (5^{th} generation, 5G) mobile communication system), or may be a CN device in a future mobile communication system. In mobile communication systems of different standards, names of CN devices having a same function may be different. However, a specific name of a CN device having each function is not limited in embodiments of this application.

For example, in a 4^{th} generation (4^{th} generation, 4G) mobile communication system (namely, long term evolution (long term evolution, LTE)), a network element responsible for functions such as access control, security control, and signaling coordination is a mobility management entity (mobility management entity, MME), a network element serving as a local mobility management anchor is a serving gateway (serving gateway, S-GW), a network element serving as an anchor for handover between external data networks and responsible for internet protocol (internet protocol, IP) address allocation is a packet data network (packet data network, PDN) gateway (PDN gateway, P-GW), a network element that stores user-related data and subscription data is a home subscriber server (home subscriber server, HSS), and a network element responsible for a policy and charging function is referred to as a policy and charging rule function (policy and charging rule function, PCRF) network element.

For another example, in a 5G mobile communication system, a core network may be divided into a control plane (control plane, CP) and a user plane (user plane, UP) based on specific logical functions. In the CN, a network element responsible for a control plane function may be collectively referred to as a control plane network element, and a network element responsible for a user plane function may be collectively referred to as a user plane network element. Specifically, on the user plane, a network element used as an interface of a data network and responsible for functions such as user plane data forwarding is a user plane function (user plane function, UPF) network element. On the control plane, a network element responsible for access control and mobility management functions is referred to as an access and mobility management function (access and mobility management function, AMF) network element, a network element responsible for session management and control policy execution is referred to as a session management function (session management function, SMF) network element, a network element responsible for functions such as subscription data management and user access authorization is referred to as a unified data management (unified data management, UDM) network element, a network element responsible for charging and policy control functions is referred to as a policy control function (Policy and charging function, PCF) network element, and a network element responsible for transmitting a requirement of an application side for a network side is an application function (application function, AF) network element.

### (5) Terminal

The terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

Embodiments of this application are also applicable to another communication system architecture, for example, an air to ground (air to ground, ATG) communication system. The communication system includes at least one network device and at least one high altitude terminal. The high altitude terminal includes, for example, a high altitude aircraft and an on-board terminal. The satellite in FIG. 2A and FIG. 2B may alternatively be replaced with another relay device, for example, may be replaced with another NTN device like a high altitude platform (high altitude platform station, HAPS). The communication system shown in FIG. 2A or FIG. 2B is used as an example, and constitutes no limitation on a communication system to which a method provided in embodiments of this application is applicable.

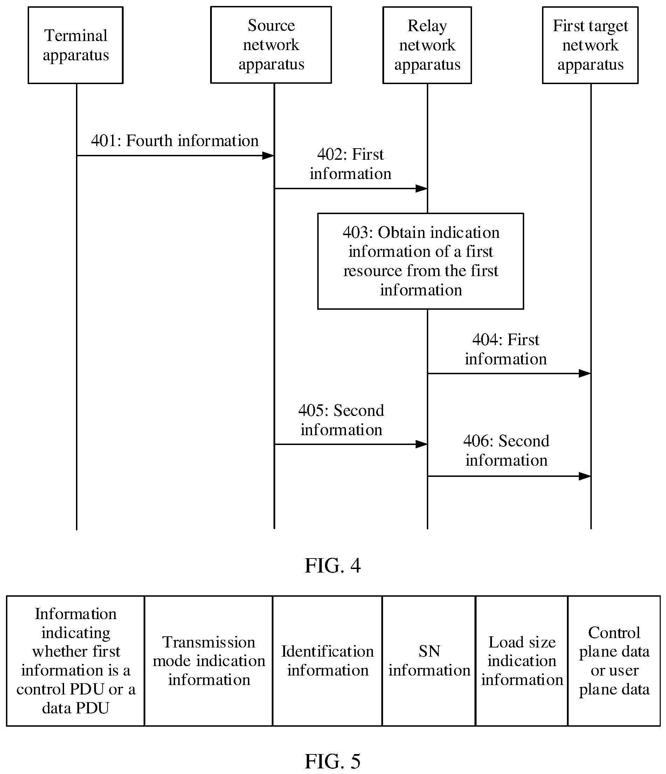

Based on the content shown in FIG. 2A, FIG. 2B, FIG. 3A, and FIG. 3B, and the foregoing other content, FIG. 4 illustrates a possible schematic flowchart of a communication method according to an embodiment of this application. For ease of understanding, in FIG. 4, interaction between a terminal apparatus, a source network apparatus, a first target network apparatus, and a relay network apparatus is used as an example for description. The terminal apparatus in this embodiment of this application may be the terminal in FIG. 2A, FIG. 2B, FIG. 3A, or FIG. 3B, or a chip system inside the terminal. The source network apparatus and the first target network apparatus may be the network device in FIG. 2A, FIG. 2B, FIG. 3A, or FIG. 3B, or a chip system inside the network device. At least one relay network apparatus may be included between the source network apparatus and the first target network apparatus. The relay network apparatus may be the satellite in FIG. 2A, FIG. 2B, FIG. 3A, or FIG. 3B, or a chip system inside the satellite, or may be a network apparatus deployed on the ground. A plurality of relay network apparatuses may be included between the source network apparatus and the first target network apparatus. The plurality of relay network apparatuses may all belong to the satellite or the chip system inside the satellite. Alternatively, a part of the plurality of relay network apparatuses belongs to the satellite or the chip system inside the satellite, and the other part belongs to the network apparatus deployed on the ground. A network apparatus deployed on the ground in this embodiment of this application is, for example, the network device deployed on the ground in FIG. 2A, FIG. 2B, FIG. 3A, or FIG. 3B, or a chip system inside the network device.

The following provides descriptions with reference to FIG. 4.

Step 401: The terminal apparatus sends fourth information to the source network apparatus.

Correspondingly, the source network apparatus receives the fourth information.

In Step 401, the terminal apparatus may obtain the fourth information, and send the fourth information to the source network apparatus. The fourth information is used by the source network apparatus to determine a first resource. The first resource is used by the relay network apparatus to transmit information associated with a handover process.

The fourth information includes information associated with the terminal apparatus. For example, the fourth information may include at least one of a priority (information A1) of the terminal apparatus, a capability (information A2) of the terminal apparatus, a quality of service requirement (information A3) of the terminal apparatus, and quality of service experience (information A4) of the terminal apparatus.

Information A1: the priority of the terminal apparatus.

The priority of the terminal apparatus includes, for example, a service level agreement (service level agreement, SLA) of the terminal apparatus and/or a category of the terminal apparatus (UE category).

Information A2: the capability of the terminal apparatus.

The capability of the terminal apparatus may include, for example, at least one of a power level of the terminal apparatus, an antenna type, a storage size of the terminal, a frequency supported by the terminal, or a polarization manner supported by the terminal.

Information A3: the quality of service (quality of service, QoS) requirement of the terminal apparatus.

The quality of service requirement of the terminal apparatus may include, for example, at least one of delay jitter, throughput, delay, and reliability of a service corresponding to the terminal apparatus.

Information A4: the quality of experience (quality of experience, QoE) of the terminal apparatus.

The quality of service experience of the terminal apparatus may include, for example, at least one of a service delay actually perceived by the terminal apparatus, user experience throughput, delay jitter, service freezing, and service interruption.

In a possible implementation, terminal apparatuses may be classified based on at least one of the information A1, the information A2, the information A3, and the information A4. For example, a terminal apparatus with a higher priority belongs to a first type, and a terminal apparatus with a lower priority belongs to a second type. For another example, a terminal apparatus whose power level is greater than a specified value belongs to a first type. It may also be understood that the terminal apparatus of the first type is associated with at least one of the priority of the terminal apparatus, the capability of the terminal apparatus, the quality of service requirement of the terminal apparatus, and the quality of experience of the terminal apparatus. The source network apparatus may allocate a same resource to a type of terminal apparatus (terminal apparatuses of a same type). The source network apparatus may allocate different resources to different types of terminal apparatuses. For example, a resource #1 is allocated to the terminal apparatus of the first type, a resource #2 is allocated to the terminal apparatus of the second type, and the resource #1 and the resource #2 may partially overlap or do not overlap. There may be a plurality of terminal apparatuses belonging to the first type. For one or more terminal apparatuses of the first type, the relay apparatus may transmit, on the resource #1, information associated with a handover process of these terminal apparatuses. For one or more terminal apparatuses of the second type, the relay apparatus may transmit, on the resource #2, information associated with a handover process of these terminal apparatuses.

In still another possible implementation, the first resource may alternatively not be determined based on the fourth information, but is determined by the source network apparatus. In this case, Step 401 may not be performed.

Step 402: The source network apparatus sends first information.

Correspondingly, the relay network apparatus receives the first information.

In this embodiment of this application, one or more relay network apparatuses may be included between the source network apparatus and the first target network apparatus. In this embodiment of this application, the relay network apparatus may be adjacent to or not adjacent to the source network apparatus. The relay network apparatus may receive the first information from the source network apparatus, or may receive the first information from another relay network apparatus.

The first information is used to request to hand over the terminal apparatus from the source network apparatus to the first target network apparatus.

The first information may be carried in a handover (handover, HO) request (request) message.

The first information may include some information. For example, the first information may include at least one of indication information (information B1) of the first resource, transmission mode indication information (information B2), identification information (information B3), and information (information B4) about a delay between the source network apparatus and the first target network apparatus.

Information B1: the indication information of the first resource.

The first resource is used by a relay network apparatus in the at least one relay network apparatus to transmit information associated with a handover process. In a possible implementation, the first resource may correspond to one or more terminal apparatuses. For example, the first resource may correspond to a type of terminal apparatus. In this way, the relay network apparatus may transmit, on the first resource, information associated with a handover process corresponding to the terminal apparatus (or the type of terminal apparatus).

In this embodiment of this application, the information associated with the handover process may include, for example, at least one of handover signaling (handover signaling), user context information (UE context information), and user data forwarding (user data forwarding). The handover signaling may include, for example, signaling involved in a handover procedure, for example, a measurement report, RRC reconfiguration, a handover request, a handover acknowledgement, SN status transfer (SN status transfer), and a path switch request (path switch request). In this application, context information of the terminal apparatus may include, for example: at least one of an identifier, an access mode, a status, bearer-related information, security information, capability information, session information, and the like of the terminal apparatus.

The indication information of the first resource in this embodiment of this application includes at least one of the following information: information B1.1, information B1.2, information B1.3, information B1.4, information B1.5, information B1.6, information B1.7, and information B1.8.

Information B1.1: information indicating a time period.

For example, if the information indicating the time period is [t1, t2], the information indicates that a time domain resource in the first resource is a time period [t1, t2], and the relay network apparatus may transmit, in the time period, the information associated with the handover process.

In a possible implementation, the source network apparatus may allocate different resources to two terminal apparatuses (for example, two types of terminal apparatuses). For example, the source network apparatus allocates a time period [t1, t2] to a terminal apparatus #1, and allocates a time period [t2, t3] to a terminal apparatus #2. The relay network apparatus may transmit, in the time period [t1, t2], information associated with a handover process of the terminal apparatus #1, and the relay network apparatus may transmit, in the time period [t2, t3], information associated with a handover process of the terminal apparatus #2. It can be learned that, in this solution, the source network apparatus may allocate a resource to the relay network apparatus, so that information associated with a handover process of a plurality of terminal apparatuses that are handed over is transmitted by using a plurality of resources, thereby balancing network load.

Information B1.2: information indicating a bandwidth resource.

Information B1.3: information indicating a transmission rate.

Information B1.4: information indicating a quality of service requirement.

Information B1.5: information indicating quality of experience.

Information B1.6: information indicating a location of the relay network apparatus.

For example, the information indicating the location of the relay network apparatus may include, for example, information like a location, an angle (for example, an inclination or a field of view), an orbital parameter (for example, an argument of perigee, a semi-major axis, an eccentricity, an inclination, a right ascension of the ascending node, and a time of perigee passage) of the relay network apparatus (for example, a satellite).

Information B1.7: information indicating a polarization manner of the relay network apparatus.

Information B1.8: information indicating a bearer, for example, a radio bearer (radio bearer) of signaling and data.

In a possible implementation, the first resource is associated with at least one of the following information: mobility interruption time (mobility interruption time) information of the terminal apparatus, that is, a time in which the terminal cannot perform data transmission with any network apparatus in a handover process; an uplink service arrival rate of the terminal apparatus; a downlink service arrival rate of the terminal apparatus; and a type of the terminal apparatus. It may also be understood that the source network apparatus may allocate a resource to the terminal apparatus based on these pieces of information. The type of the terminal apparatus may be associated with at least one of the information A1, the information A2, the information A3, and the information A4. It may also be understood that the source network apparatus may determine the type of the terminal apparatus based on at least one of the information A1, the information A2, the information A3, and the information A4.

Information B2: the transmission mode indication information.

In this embodiment of this application, one piece of information (for example, the first information) may carry the transmission mode indication information, and the transmission mode indication information may indicate a transmission mode (transmission mode) of the information.

In this embodiment of this application, an example in which the transmission mode includes a first transmission mode and a second transmission mode is used for description. The first transmission mode and the second transmission mode may also be referred to as a transmission mode A and a transmission mode B, respectively. The first transmission mode means that the relay network apparatus performs relay forwarding on information, and needs to obtain part of content of the information. The second transmission mode means that the relay network apparatus performs relay forwarding on the information. In the second transmission mode, the relay network apparatus does not need to obtain content in the information on which relay forwarding is performed; or the second transmission mode may also be understood as meaning that the relay network apparatus only performs relay forwarding on the information, but does not perform other processing on the information.

The relay forwarding in this embodiment of this application may be that the relay network apparatus transparently forwards the information (that is, the relay network apparatus operates in a transparent transmission mode), or may be that the relay network apparatus regeneratively forwards the information (that is, the relay network apparatus operates in a regenerative mode).

In a possible implementation, the first information includes information indicating that a transmission mode of the relay network apparatus for the first information is the first transmission mode. Alternatively, it is understood that the transmission mode indicated by the transmission mode indication information in the first information is the first transmission mode. The first transmission mode includes: The relay network apparatus performs relay forwarding on the first information, and obtains the indication information of the first resource in the first information.

In this embodiment of this application, a resource carried in the indication information of the first resource may be a specified field. When determining that a transmission mode of one piece of information is the first transmission mode, the relay network apparatus needs to further identify content carried in the specified field. In another possible implementation, the first information may further indicate a field that needs to be identified by the relay network apparatus. For example, the first information further includes information indicating the relay network apparatus to obtain content carried in a first field of the first information, and the first field includes a field used to carry the indication information of the first resource in the first information. In this way, the relay network apparatus may determine, based on the information, that the content carried in the first field needs to be identified.

Information B3: the identification information.

For example, the information B3 may include, for example, at least one of identification information of the relay network apparatus, identification information of the first target network apparatus, and information about a path from the source network apparatus to the first target network apparatus.

The relay network apparatus may determine information about a next hop based on the information B3. Therefore, the solution provided in this embodiment of this application is applicable to a scenario in which the at least one relay network apparatus is included between the source network apparatus and the first target network apparatus.

The source network apparatus may determine the information about the path from the source network apparatus to the first target network apparatus. The path may be determined based on at least one of the following factors: a terminal type, a terminal capability, a service level agreement (SLA), a service type, a handover time period, and the like. For example, for a service of a delay-sensitive and/or high-priority terminal, a transmission path may be determined according to a shortest delay criterion; and for a service of a delay-insensitive and/or low-priority terminal, a transmission path may be determined according to an available bandwidth criterion, to avoid network congestion and implement load balancing.

In a possible implementation, for one or more (for example, of a same type) terminal apparatuses, the plurality of relay network apparatuses between the source network apparatus and the first target network apparatus may correspond to a same first resource, and the plurality of relay network apparatuses may transmit, on the same first resource, information associated with the handover process of the terminal apparatus.

In still another possible implementation, an information transmission path from the source network apparatus to the first target network apparatus includes a plurality of relay network apparatuses, the first information includes indication information of a plurality of first resources, the plurality of relay network apparatuses are associated with first resources in the plurality of first resources, and two first resources associated with two of the plurality of relay network apparatuses partially overlap or do not overlap. In this implementation, the first information may further include identification information of a relay network apparatus corresponding to each first resource. In this implementation, for one or more (for example, of a same type) terminal apparatuses, the source network apparatus may allocate resources that are not completely the same to different relay network apparatuses, so that finer-granularity management of resources can be implemented.

Information B4: the information about the delay between the source network apparatus and the first target network apparatus.

The first information carries the information B4, so that the relay network apparatus and/or the first target network apparatus can learn of the delay information, thereby establishing a better transmission path, assisting subsequent data transmission based on the information, and further reducing an end-to-end communication delay.

In addition to the information B1, the information B2, the information B3, and the information B4, the first information may further include some other information. FIG. 5 illustrates a possible structure of the first information. As shown in FIG. 5, the first information includes the information B2 and the information B3. As shown in FIG. 5, the first information may further include information indicating whether the first information is a control protocol data unit (protocol data unit, PDU) or a data PDU. The first information further includes SN information, and the SN information is used to sort segmented PDUs. The first information further includes load size indication information, where the load size indication information indicates a size of the first information, and the first information may further include control plane data or user plane data.

FIG. 5 shows a possible example of the first information. The first information may further include more or less information, and a sequence of content in the first information may also be changed.

Step 403: The relay network apparatus obtains the indication information of the first resource from the first information.

In a possible implementation, after receiving the first information, the relay network apparatus may determine, according to a protocol specification or a preset rule, that the indication information of the first resource needs to be obtained. In another possible implementation, the first information may carry indication information of the first transmission mode, and the relay network apparatus determines, based on the information, that the indication information of the first resource needs to be obtained from the first information.

Step 404: The relay network apparatus sends the first information.

Correspondingly, the first target network apparatus receives the first information.

In this embodiment of this application, the relay network apparatus may be adjacent to or not adjacent to the first target network apparatus. The first target network apparatus may receive the first information from the relay network apparatus, or may receive the first information from another relay network apparatus. In this embodiment of this application, one relay network apparatus is used as an example for description. A solution performed by another relay network apparatus is similar to that performed by the relay network apparatus. Details are not described again.

Step 405: The source network apparatus sends second information.

Correspondingly, the relay network apparatus receives the second information.

The second information belongs to the information associated with the handover process. For example, the second information is handover signaling (handover signaling), user context information (UE context information), user data forwarding (user data forwarding), or SN status transfer (SN status transfer) information.

Step 406: The relay network apparatus sends the second information on the first resource.

Correspondingly, the first target network apparatus receives the second information.

In a possible implementation, after a time domain resource in the first resource expires, the relay network apparatus may release the first resource. For example, the time domain resource in the first resource includes a time period [t1, t2], and the relay network apparatus may release the first resource after a moment (t2+t_offset), where t_offset is greater than or equal to 0.

It can be learned that, in the solution provided in FIG. 4, the source network apparatus may allocate, to the relay network apparatus, the resource used to transmit the information associated with the handover process. In a scenario in which terminal apparatuses are handed over to a network apparatus (for example, in a group handover scenario), resources used by the relay network apparatus to transmit information associated with each terminal apparatus may be dispersed, and do not need to be excessively centralized. In this way, network load can be balanced, and a peak value of the network load can be reduced, thereby avoiding network congestion. In addition, a network side may dynamically adjust a transmission path from a source network to a target network based on path and delay information obtained in near real time, thereby better matching service requirements of different terminal types, and improve communication quality and satisfaction.

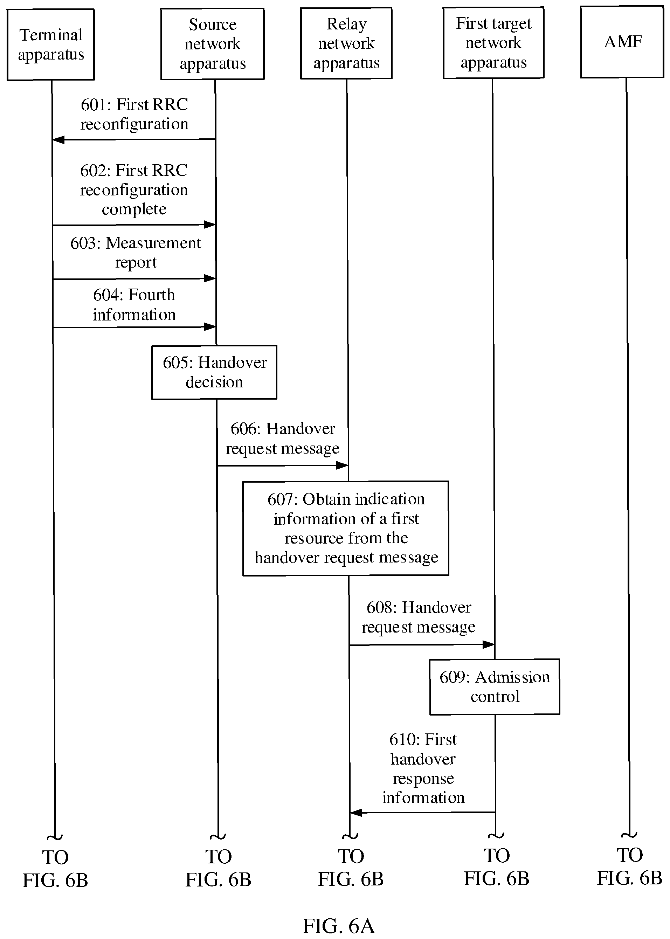

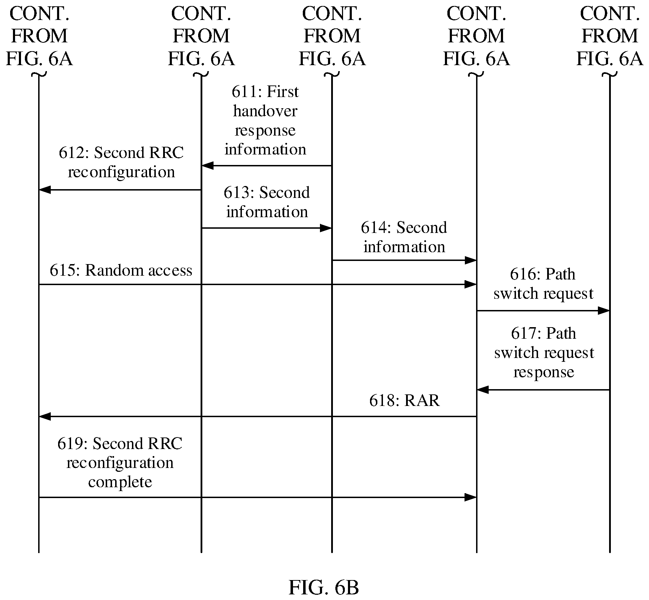

Based on the content shown in FIG. 2A, FIG. 2B, FIG. 3A, FIG. 3B, FIG. 4, and FIG. 5, and the foregoing other content, FIG. 6A and FIG. 6B illustrate a possible schematic flowchart of a communication method according to an embodiment of this application. A solution provided in FIG. 6A and FIG. 6B may be considered as an extended embodiment of the solution provided in FIG. 4. For execution bodies in FIG. 6A and FIG. 6B, refer to the related descriptions in FIG. 4. Details are not described again. In the solution provided in FIG. 6A and FIG. 6B, when the terminal apparatus is in a connected state, a network device may send measurement configuration information to the terminal apparatus by using an RRC connection reconfiguration message. The terminal apparatus measures signal strength of a serving cell and a neighboring cell based on the measurement configuration information delivered by the network device, and reports a measurement result. Then, the network device may determine, based on the measurement result, whether to perform handover. The following provides descriptions with reference to FIG. 6A and FIG. 6B.

Step 601: The source network apparatus sends a first RRC reconfiguration (RRCReconfiguration) message to the terminal apparatus.

The first RRC reconfiguration message may include measurement configuration information of at least one cell. The at least one cell may include a serving cell and a neighboring cell of the terminal apparatus.

The measurement configuration information may include, for example, a measurement frequency, an SSB-based measurement timing configuration (An SSB-based measurement timing configuration, SMTC) configuration, a measurement reporting trigger condition (for example, periodic, aperiodic, or event-triggered), and a measurement object (for example, a location or signal quality). The SMTC configuration may include duration, a period, and a time offset of measurement performed by the terminal apparatus.

Step 602: The terminal apparatus sends a first RRC reconfiguration complete (RRCReconfigurationComplete) message to the source network apparatus.

The first RRC reconfiguration complete message may indicate that the terminal apparatus has received the first RRC reconfiguration message.

Step 603: The terminal apparatus performs measurement based on the measurement configuration information, and sends a measurement report to the source network apparatus.

Optionally, the terminal apparatus may measure, based on the measurement configuration information, the serving cell and/or the neighboring cell by using an SSB associated with a current active BWP. In some possible manners, the terminal apparatus may periodically send the measurement report to the source network apparatus. A period for sending the measurement report may be preset, or may be obtained by the terminal apparatus from the source network apparatus. In some other possible manners, the terminal apparatus may send the measurement report to the source network apparatus when the measurement result meets a reporting condition. The reporting condition may include at least one of the following: signal quality of the serving cell is less than or equal to a first signal quality threshold, signal quality of the neighboring cell is greater than or equal to a second signal quality threshold, and the like.

The measurement report may include a parameter used to reflect signal quality. In this application, the parameter used to reflect signal quality may include but is not limited to at least one of the following: reference signal received power (reference signal received power, RSRP), reference signal received quality (reference signal received quality, RSRQ), or a received signal strength indicator (received signal strength indicator, RSSI).

In a possible implementation, the cell signal quality reported by the terminal apparatus may be associated with location information of the terminal apparatus. The location information may include, for example, a global navigation satellite system (global navigation satellite system, GNSS) position or a beam footprint identifier (identifier, ID). The source network apparatus may determine, with the assistance of the location information, whether the terminal apparatus needs to be handed over to a network apparatus.

Step 604: The terminal apparatus sends fourth information to the source network apparatus.

Correspondingly, the source network apparatus receives the fourth information.

For related content of Step 604, refer to the related descriptions of Step 401. Details are not described again.

Step 605: The source network apparatus performs a handover decision based on the measurement report from the terminal apparatus.

For example, if the measurement report of the terminal apparatus includes signal quality of a cell of the first target network apparatus, the signal quality of the cell of the first target network apparatus is greater than or equal to the second signal quality threshold, a distance between a location of the terminal apparatus and a reference location of a source network is greater than a first distance threshold, and a distance between the location of the terminal apparatus and a reference location of a first target network is less than a second distance threshold, the source network apparatus may determine to hand over the terminal apparatus to the first target network apparatus.

Step 606: The source network apparatus sends a handover request (handover request) message.

Correspondingly, the relay network apparatus receives the handover request message.

The handover request message is used to request to hand over the terminal apparatus from the source network apparatus to the first target network apparatus.

The handover request message may be an example of the foregoing first information. The handover request message may include indication information of a first resource. For related content, refer to the foregoing description of the first information. Details are not described again.

For Step 606, refer to the content of Step 402. Details are not described again.

Step 607: The relay network apparatus obtains the indication information of the first resource from the handover request message.

For Step 607, refer to the content of Step 403. Details are not described again.

Step 608: The relay network apparatus sends the handover request message.

Correspondingly, the first target network apparatus receives the handover request message.

For Step 608, refer to the content of Step 404. Details are not described again.

Step 609: The first target network apparatus performs admission control.

For example, the first target network apparatus may configure, for the terminal apparatus, a resource required for handover, for example, at least one of a cell radio network temporary identifier (Cell Radio Network Temporary Identifier, C-RNTI), a preamble (preamble), a random access channel occasion (random access channel occasion, RO), and a time-frequency resource required for handover.

Alternatively, the first target network apparatus may obtain the first resource, and then receive, on the first resource, handover-associated information from the relay network apparatus.

Step 610: The first target network apparatus sends first handover response information.

Correspondingly, the relay network apparatus receives the first handover response information. The first handover response information may be, for example, a handover request response (handover request acknowledgement). The first handover response information is response information of the first information. The handover request response message may indicate that the first target network apparatus agrees to hand over the terminal apparatus to the first target network apparatus.

The first handover response information may include transmission mode indication information, and the transmission mode indication information indicates a second transmission mode. It may also be understood that the first handover response information includes information indicating that a transmission mode of the relay network apparatus is the second transmission mode, and the second transmission mode indicates that the relay network apparatus performs relay forwarding on the first handover response information. It may also be understood that the second transmission mode indicates that the relay network apparatus only performs relay forwarding on the first handover response information, but does not need to obtain content in the information. The relay network apparatus may perform relay forwarding on the first handover response information in a transparent forwarding (forwarding in a transparent operating mode) or regenerative forwarding (forwarding in a regenerative operating mode).

In a possible implementation, the handover request response message may further include at least one of a C-RNTI, a preamble (preamble), an RO, and a time-frequency resource required for handover.

Step 611: The relay network apparatus sends the first handover response information.

Correspondingly, the source network apparatus receives the first handover response information.

Step 612: The source network apparatus sends a second RRC reconfiguration message to the terminal apparatus.

The second RRC reconfiguration message may also be referred to as a handover command, and indicates the terminal apparatus to be handed over from the source network apparatus to the first target network apparatus.

Optionally, the second RRC reconfiguration message may include a configuration parameter of the cell of the first target network apparatus, for example, an identifier of the cell of the first target network apparatus, or a frequency of the cell of the first target network apparatus. The second RRC reconfiguration message may further include, for example, at least one of a C-RNTI, a preamble (preamble), an RO, and a time-frequency resource required for handover.

Step 613: The source network apparatus sends second information.

Correspondingly, the relay network apparatus receives the second information.

In a possible implementation, the second information may also include the transmission mode indication information, and the transmission mode indication information indicates the second transmission mode. It may also be understood that the second information further includes the information indicating that the transmission mode of the relay network apparatus is the second transmission mode, and the second transmission mode indicates that the relay network apparatus performs relay forwarding on the second information. The relay network apparatus does not need to obtain information from the second information.

For example, the second information may include, for example, a sequence number (sequence number, SN) status transfer (SN status transfer) message. The SN status transfer message may indicate a sequence number of a data packet that has been transmitted by the source network apparatus to the terminal apparatus. Optionally, the source network apparatus forwards, to the first target network apparatus, data to be sent to the terminal apparatus.

For another example, the second information includes a context of the terminal apparatus (UE context release).

For another example, the second information includes a handover acknowledgement (HO Acknowledgement).

For content of Step 613, refer to the related content of Step 405. Details are not described again.

Step 614: The relay network apparatus sends the second information on the first resource.

Correspondingly, the first target network apparatus receives the second information.

For content of Step 614, refer to the related content of Step 406. Details are not described again.

Step 615: The terminal apparatus sends a random access (random access) message to the first target network apparatus based on the configuration parameter of the cell of the first target network apparatus in the second RRC reconfiguration message, to request to access the cell of the first target network apparatus.

The terminal apparatus may be handed over to the first target network apparatus by using a random access channel (random access channel, RACH) or a random access channel-less (random access channel-less, RACH-less) process. A random access preamble in the random access message is a dedicated preamble (for example, may be a preamble allocated by the first target network apparatus to the terminal apparatus), and is different from a contention-based random access preamble used during initial access. In addition, a period of a resource used to send the random access may be at least one of the following: 10 ms, 20 ms, 40 ms, 80 ms, or 160 ms.

Step 616: The first target network apparatus sends a path switch request (path switch request) message to an AMF.

The path switch request message may be used to request a core network to send data of the terminal apparatus to the first target network apparatus.

Step 617: The AMF sends a path switch request response (path switch request acknowledgement) message to the first target network apparatus.

After receiving the path switch request response message, the first target network apparatus may send uplink data from the terminal apparatus to the core network.

Step 618: The first target network apparatus sends a random access response (random access response, RAR) message to the terminal apparatus.

Step 619: The terminal apparatus sends a second RRC reconfiguration complete message to the first target network apparatus.

After accessing the first target network apparatus, the terminal apparatus may exchange data with the first target network apparatus. For example, the terminal apparatus may send uplink data to the first target network apparatus. For another example, the terminal apparatus may receive downlink data from the first target network apparatus.

When a transmission path of the core network is changed, the first target network apparatus may indicate the source network apparatus to release context information of the terminal apparatus, and the first target network apparatus may deliver new measurement configuration information to the terminal apparatus. The terminal apparatus may further return a reconfiguration acknowledgement.

According to the method shown in FIG. 6A and FIG. 6B, the terminal apparatus may be handed over from the source network apparatus to the first target network apparatus. In this process, the source network apparatus allocates the resource to the relay network apparatus by using the handover request message, and enables the relay network apparatus to transmit handover-associated information on the resource. Because resources used by the relay network apparatus to transmit information associated with each terminal apparatus may be dispersed, and do not need to be excessively centralized, network load can be balanced, and a peak value of the network load can be reduced, thereby improving communication quality.

The solution provided in this embodiment of this application is applicable to multi-hop transmission (that is, at least one relay network apparatus is included between the source network apparatus and the first target network apparatus), and is further applicable to a satellite-to-ground transmission scenario (that is, at least one ground apparatus is included on a transmission path between a source network and a target network, and the ground apparatus may be a ground gateway, a network apparatus deployed on the ground, or the like). A specific handover manner of the terminal apparatus is not limited in embodiments of this application. For example, handover of the terminal apparatus may be layer 3 (layer 3, L3) handover, bottom-layer handover (for example, layer 1/layer 2-triggered mobility (layer 1/layer 2-triggered mobility, LTM) handover), or conditional handover (conditional handover, CHO) handover.

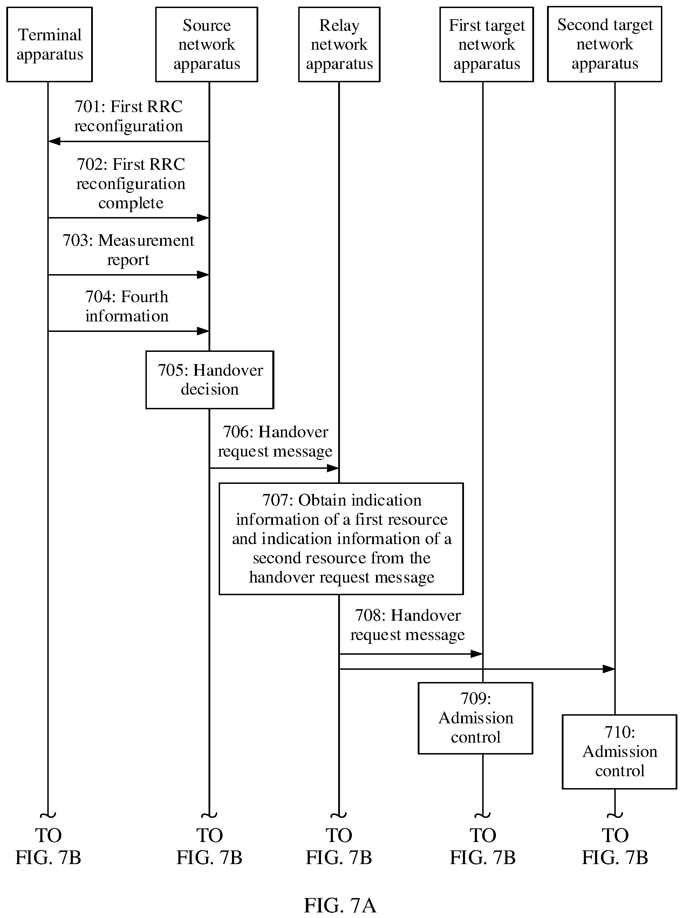

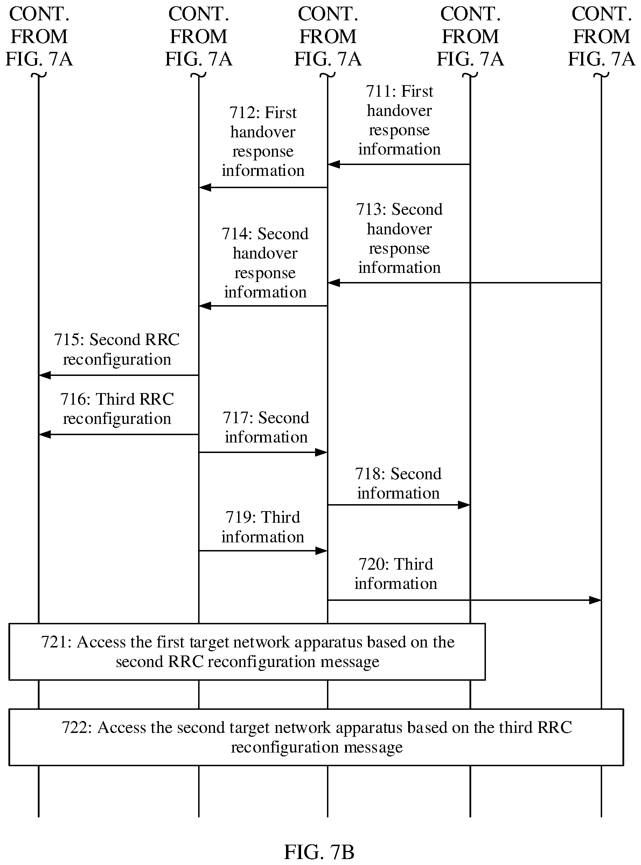

Based on the content shown in FIG. 2A, FIG. 2B, FIG. 3A, FIG. 3B, FIG. 4, FIG. 5, FIG. 6A, and FIG. 6B, and the foregoing other content, FIG. 7A and FIG. 7B illustrate a possible schematic flowchart of a communication method according to an embodiment of this application. A solution provided in FIG. 7A and FIG. 7B may be considered as an extended embodiment of the solutions provided in FIG. 4, and FIG. 6A and FIG. 6B. For execution bodies in FIG. 7A and FIG. 7B, refer to the related descriptions in FIG. 4. Details are not described again. In the solution provided in FIG. 7A and FIG. 7B, the terminal apparatus may be handed over from the source network apparatus to the first target network apparatus, and the terminal apparatus is further handed over from the source network apparatus to a second target network apparatus. The first target network apparatus and the second target network apparatus may be located in a same physical device, or may be located in two different physical devices. For example, the first network apparatus carries a primary cell (primary cell, PCell), and the second network apparatus carries a secondary cell (secondary cell, SCell) or a primary secondary cell (primary secondary cell, PSCell). In the solution provided in FIG. 7A and FIG. 7B, for different target network apparatuses, the source network apparatus may further separately allocate resources to the different target network apparatuses, so that network load can be further balanced.

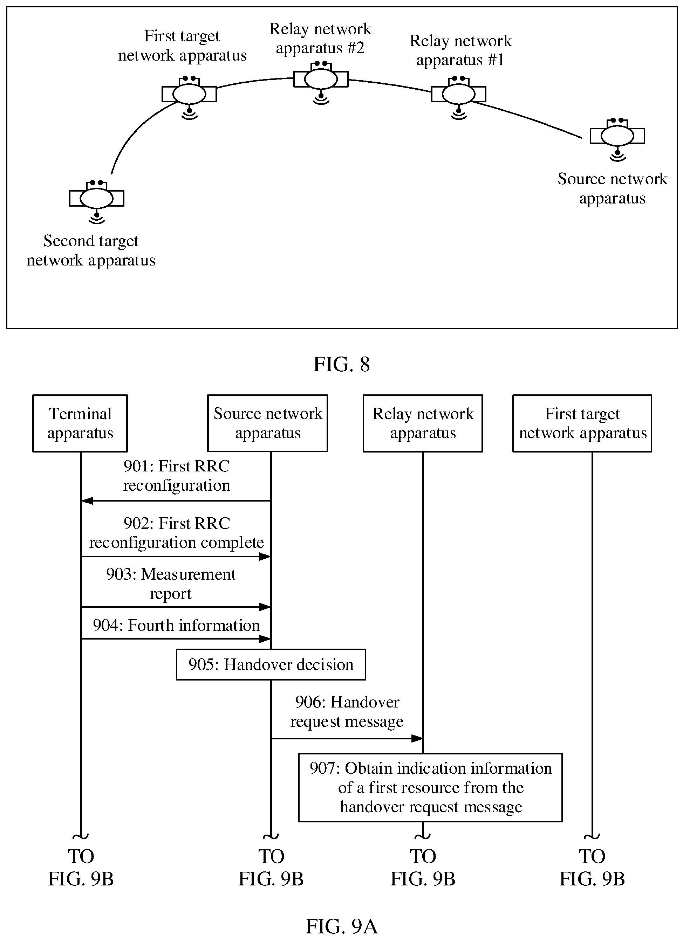

To facilitate understanding of the implementation solution provided in FIG. 7A and FIG. 7B, FIG. 8 is an example of a diagram of an architecture of a communication system. As shown in FIG. 8, the communication system includes a source network apparatus, a first target network apparatus, a second target network apparatus, and at least one relay network apparatus. A relay network apparatus #1 and a relay network apparatus #2 are included between the source network apparatus and the first target network apparatus. The relay network apparatus #1 and the relay network apparatus #2 are included between the source network apparatus and the second target network apparatus. The first target network apparatus may be further included between the source network apparatus and the second target network apparatus, and the first target network apparatus may also be considered as a relay network apparatus. The relay network apparatus #1 and the relay network apparatus #2 may be satellite devices, or may be network apparatuses deployed on the ground. In FIG. 8, a satellite device is used as an example for description. The following provides descriptions with reference to FIG. 7A, FIG. 7B, and FIG. 8.

Step 701: The source network apparatus sends a first RRC reconfiguration message to the terminal apparatus.

For content of Step 701, refer to Step 601. Details are not described again.

Step 702: The terminal apparatus sends a first RRC reconfiguration complete message to the source network apparatus.

For content of Step 702, refer to Step 602. Details are not described again.

Step 703: The terminal apparatus performs measurement based on measurement configuration information, and sends a measurement report to the source network apparatus.

For content of Step 703, refer to Step 603. Details are not described again.

Step 704: The terminal apparatus sends fourth information to the source network apparatus.

Correspondingly, the source network apparatus receives the fourth information.

For content of Step 704, refer to Step 604. Details are not described again.

Step 705: The source network apparatus performs a handover decision based on the measurement report from the terminal apparatus.

For content of Step 705, refer to Step 605. Details are not described again.

Step 706: The source network apparatus sends a handover request (handover request) message.

Correspondingly, the relay network apparatus receives the handover request message.

The handover request message is used to request to hand over the terminal apparatus from the source network apparatus to the first target network apparatus. The handover request message is further used to request to hand over the terminal apparatus from the source network apparatus to the second target network apparatus.

The handover request message may be an example of the foregoing first information. The handover request message may include indication information of a first resource. In an implementation shown in FIG. 7A and FIG. 7B, the first information (for example, the handover request message) further includes indication information of a second resource. The first resource is used by the relay network apparatus to transmit information associated with a handover process to the first target network apparatus. The second resource is used by the relay network apparatus to transmit the information associated with the handover process to the second target network apparatus.

The handover request message carries transmission mode indication information, and the transmission mode indication information indicates a first transmission mode. The relay network apparatus needs to obtain not only the indication information of the first resource, but also the indication information of the second resource. For example, the indication information of the second resource is also carried in the foregoing first field, and the relay network apparatus identifies information of the first field. The first field may be a field that is defined in a protocol and that needs to be identified by the relay network apparatus, or a field that is negotiated and that needs to be identified by the relay network apparatus, or the first information carries information indicating that the relay network apparatus needs to identify content of the first field. The indication information of the second resource is similar to the indication information of the first resource. For example, the indication information of the second resource includes a time period [t3, t4] and a reserved bandwidth resource #2. For related content, refer to the indication information of the first resource. Details are not described again.

Similarly, when a plurality of relay network apparatuses are included between the source network apparatus and the second target network apparatus, the first information may also carry indication information of a plurality of second resources, and one relay network apparatus may correspond to one second resource. For related content, refer to the related descriptions of the plurality of first resources. Details are not described again.

The first information further includes at least one of the following: information indicating the second target network apparatus; information indicating an information transmission path from the source network apparatus to the second target network apparatus; information indicating a relay network apparatus on the information transmission path from the source network apparatus to the second target network apparatus; and information indicating a delay of the information transmission path from the source network apparatus to the second target network apparatus. For related content, refer to the foregoing descriptions. The related content is similar to the related content of the first target network apparatus. Details are not described again.

For other related content of the handover request message, refer to the foregoing descriptions of the first information. Details are not described again.

For Step 706, refer to the content of Step 606. Details are not described again.

Step 707: The relay network apparatus obtains the indication information of the first resource and the indication information of the second resource from the handover request message.

The relay network apparatus in Step 707 may be the relay network apparatus #1 or the relay network apparatus #2 in FIG. 8. In a possible implementation, the first target network apparatus may also be considered as a relay network apparatus between the source network apparatus and the second target network apparatus. In this case, the relay network apparatus in Step 707 may alternatively be the first target network apparatus.

For Step 707, refer to the content of Step 607. Details are not described again.

Step 708: The relay network apparatus sends the handover request message.

Correspondingly, the first target network apparatus receives the handover request message.

In Step 708, the second target network apparatus may also receive the handover request message.

In this embodiment of this application, the first target network apparatus and the second network apparatus may separately receive the handover request message from different relay network apparatuses, or receive the handover request message from a same relay network apparatus. In a possible implementation, the second target network apparatus may alternatively receive the handover request message from the first target network apparatus.

For Step 708, refer to the content of Step 608. Details are not described again.

Step 709: The first target network apparatus performs admission control.

For Step 709, refer to the content of Step 609. Details are not described again.

Step 710: The second target network apparatus performs admission control.

For example, the second target network apparatus may configure, for the terminal apparatus, a resource required for handover, for example, at least one of a C-RNTI, a preamble (preamble), an RO, and a time-frequency resource required for handover.

Alternatively, the second target network apparatus may obtain the second resource, and then receive, on the second resource, handover-associated information from the relay network apparatus.

Content of performing admission control by the second target network apparatus is similar to the content of performing admission control by the first target network apparatus. For Step 710, refer to the content of Step 609. Details are not described again.

Step 711: The first target network apparatus sends first handover response information.

Correspondingly, the relay network apparatus receives the first handover response information.

For Step 711, refer to the content of Step 610. Details are not described again.

Step 712: The relay network apparatus sends the first handover response information.

Correspondingly, the source network apparatus receives the first handover response information.

For Step 712, refer to the content of Step 611. Details are not described again.

Step 713: The second target network apparatus sends second handover response information.

Correspondingly, the relay network apparatus receives the second handover response information.

Content of the second handover response information is similar to content of the first handover response information. For Step 713, refer to the content of Step 610. Details are not described again.

Step 714: The relay network apparatus sends the second handover response information.

Correspondingly, the source network apparatus receives the second handover response information.

For Step 714, refer to the content of Step 611. Details are not described again.

Step 715: The source network apparatus sends a second RRC reconfiguration message to the terminal apparatus.

For Step 715, refer to the content of Step 612. Details are not described again.

Step 716: The source network apparatus sends a third RRC reconfiguration message to the terminal apparatus.

The third RRC reconfiguration message may also be referred to as a handover command, and indicates the terminal apparatus to be handed over from the source network apparatus to the second target network apparatus.

Optionally, the third RRC reconfiguration message may include a configuration parameter of a cell of the second target network apparatus. Content of the third RRC reconfiguration message is similar to content of the second RRC reconfiguration message. Details are not described again.

For Step 716, refer to the content of Step 612. Details are not described again.

Step 717: The source network apparatus sends second information.

Correspondingly, the relay network apparatus receives the second information.

For content of Step 717, refer to the related content of Step 613. Details are not described again.

Step 718: The relay network apparatus sends the second information on the first resource.

Correspondingly, the first target network apparatus receives the second information.

For content of Step 718, refer to the related content of Step 614. Details are not described again.

Step 719: The source network apparatus sends third information.

Correspondingly, the relay network apparatus receives the third information.

The third information belongs to the information associated with the handover process. For example, the third information is handover signaling (handover signaling), user context information (UE context information), user data forwarding (user data forwarding), or SN status transfer (SN status transfer) information.

In a possible implementation, the third information may also include transmission mode indication information, and the transmission mode indication information indicates a second transmission mode. It may also be understood that the third information further includes information indicating that a transmission mode of the relay network apparatus is the second transmission mode, and the second transmission mode indicates that the relay network apparatus performs relay forwarding on the third information. The relay network apparatus does not need to obtain information from the third information.

Content of Step 719 is similar to the related content of Step 613. Details are not described again.

Step 720: The relay network apparatus sends the third information on the second resource.

Correspondingly, the second target network apparatus receives the third information.

Content of Step 720 is similar to the related content of Step 614. Details are not described again.

Step 721: The terminal apparatus accesses the first target network apparatus based on the second RRC reconfiguration message.

For content of Step 721, refer to the implementation provided in any one of Step 615, Step 616, Step 617, Step 618, and Step 619. Details are not described again.

Step 722: The terminal apparatus accesses the second target network apparatus based on the third RRC reconfiguration message.

For content of Step 722, refer to the implementation provided in any one of Step 615, Step 616, Step 617, Step 618, and Step 619. Details are not described again.

According to the method shown in FIG. 7A and FIG. 7B, the terminal apparatus may be handed over from the source network apparatus to the first target network apparatus and the second target network apparatus. In this process, the source network apparatus allocates the resource to the relay network apparatus by using the handover request message, separately allocates the resources to different target network apparatuses, and enables the relay network apparatus to separately transmit the handover-associated information to the different target network apparatuses on the different resources. Because resources used by the relay network apparatus to transmit information associated with each terminal apparatus to the different target network apparatuses may be dispersed, and do not need to be excessively centralized, network load can be balanced, and a peak value of the network load can be reduced, thereby improving communication quality.

In the implementation provided in FIG. 7A and FIG. 7B, the relay network apparatus is a relay network apparatus on an information transmission path between the source network apparatus and the first target network apparatus, and the relay network apparatus is also a relay network apparatus on the information transmission path between the source network apparatus and the second target network apparatus. In actual application, relay network apparatuses on two information transmission paths between the source network apparatus and two target network apparatuses are not completely the same. For example, the relay network apparatus #1 is only a relay network apparatus on the information transmission path between the source network apparatus and the first target network apparatus, but not a relay network apparatus on the information transmission path between the source network apparatus and the second target network apparatus. In this case, the relay network apparatus #1 may obtain only information about the first resource from the first information, or obtain information about the first resource and information about the second resource from the first information. Alternatively, the relay network apparatus #1 may subsequently transmit only information between the source network apparatus and the first target network apparatus, for example, the first handover response information, and not transmit the second handover response information. The second handover response information is transmitted by the relay network apparatus between the source network apparatus and the second target network apparatus.

In a possible implementation, after a time domain resource in the second resource expires, the relay network apparatus may release the second resource. For example, the time domain resource in the second resource includes a time period [t3, t4], and the relay network apparatus may release the second resource after a moment (t4+t_offset'), where t_offset' is greater than or equal to 0. t_offset' may be the same as or different from t_offset.

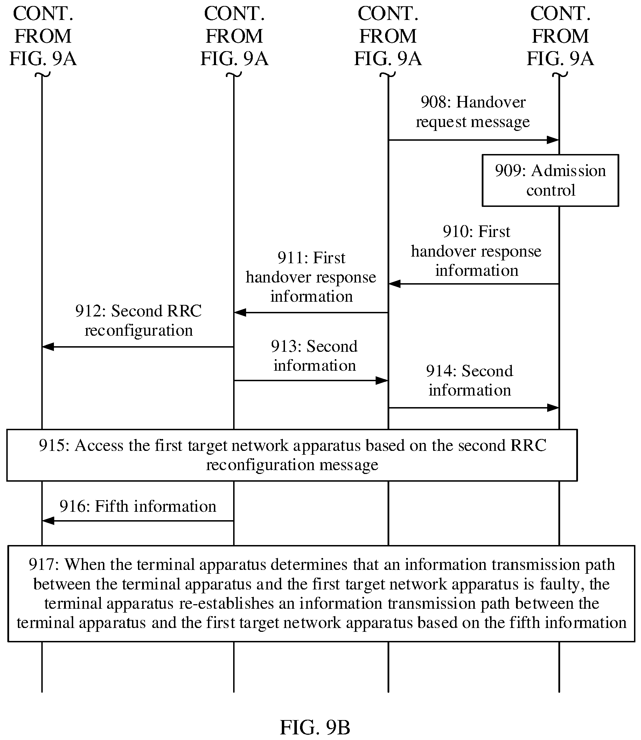

Based on the content shown in FIG. 2A, FIG. 2B, FIG. 3A, FIG. 3B, FIG. 4, FIG. 5, FIG. 6A, FIG. 6B, FIG. 7A, FIG. 7B, and FIG. 8, and the foregoing other content, FIG. 9A and FIG. 9B illustrate a possible schematic flowchart of a communication method according to an embodiment of this application. A solution provided in FIG. 9A and FIG. 9B may be considered as an extended embodiment of the solutions provided in FIG. 4, FIG. 6A and FIG. 6B, and FIG. 7A and FIG. 7B. For execution bodies in FIG. 9A and FIG. 9B, refer to the related descriptions in FIG. 4. Details are not described again. In the solution provided in FIG. 9A and FIG. 9B, each relay network apparatus may further store context information of the terminal apparatus. After handover fails, the terminal apparatus may select relay network apparatuses that store the context information of the terminal apparatus, and re-establish an information transmission path between the source network apparatus and the first target network apparatus via these relay network apparatuses. In this solution, because the terminal apparatus may select the relay network apparatuses that store the context information of the terminal apparatus to re-establish the information transmission path, a speed of establishing the information transmission path can be improved.

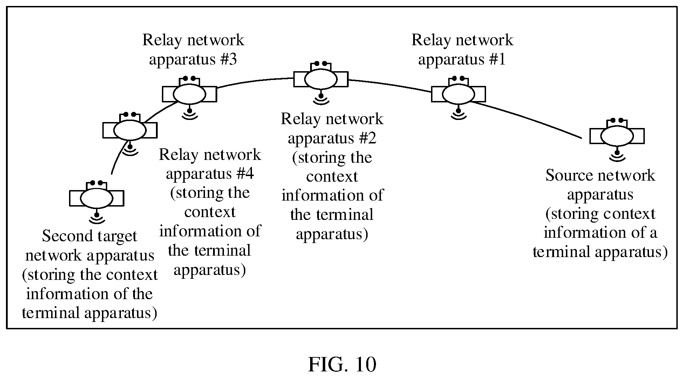

To facilitate understanding of the implementation solution provided in FIG. 9A and FIG. 9B, FIG. 10 is an example of a diagram of an architecture of a communication system. As shown in FIG. 10, the communication system includes a source network apparatus, a first target network apparatus, and at least one relay network apparatus (for example, a relay network apparatus #1, a relay network apparatus #2, a relay network apparatus #3, and a relay network apparatus #4 shown in the figure). The relay network apparatus #2 and the relay network apparatus #4 are relay network apparatuses that store the context information of the terminal apparatus. The relay network apparatus may be a satellite device, or may be a network apparatus deployed on the ground. In FIG. 10, a satellite device is used as an example for description. The following provides descriptions with reference to FIG. 9A, FIG. 9B, and FIG. 10.

Step 901: The source network apparatus sends a first RRC reconfiguration message to the terminal apparatus.

For content of Step 901, refer to Step 601. Details are not described again.

Step 902: The terminal apparatus sends a first RRC reconfiguration complete message to the source network apparatus.

For content of Step 902, refer to Step 602. Details are not described again.

Step 903: The terminal apparatus performs measurement based on measurement configuration information, and sends a measurement report to the source network apparatus.

For content of Step 903, refer to Step 603. Details are not described again.

Step 904: The terminal apparatus sends fourth information to the source network apparatus.

Correspondingly, the source network apparatus receives the fourth information.

For content of Step 904, refer to Step 604. Details are not described again.

Step 905: The source network apparatus performs a handover decision based on the measurement report from the terminal apparatus.

For content of Step 905, refer to Step 605. Details are not described again.

Step 906: The source network apparatus sends a handover request (handover request) message.

Correspondingly, the relay network apparatus receives the handover request message.

The handover request message is used to request to hand over the terminal apparatus from the source network apparatus to the first target network apparatus. The handover request message may be an example of the foregoing first information. The handover request message may include indication information of a first resource.

In an implementation shown in FIG. 9A and FIG. 9B, the first information (for example, the handover request message) may further include context information of the terminal apparatus.

The handover request message carries transmission mode indication information, and the transmission mode indication information indicates a first transmission mode. The relay network apparatus needs to obtain not only the indication information of the first resource, but also the context information of the terminal apparatus. For example, the context information of the terminal apparatus is also carried in the foregoing first field, and the relay network apparatus identifies information of the first field. The first field may be a field that is defined in a protocol and that needs to be identified by the relay network apparatus, or a field that is negotiated and that needs to be identified by the relay network apparatus, or the first information carries information indicating that the relay network apparatus needs to identify content of the first field.

In another possible implementation, the first information further includes identification information of a relay network apparatus that needs to identify the context information of the terminal apparatus. In other words, not all relay network apparatuses need to identify the context information of the terminal apparatus in the first information, but only a part of relay network apparatuses need to identify the context information of the terminal apparatus in the first information. Identification information of the part of relay network apparatuses may be carried in the first information, and the relay network apparatus may determine, based on the information, whether the relay network apparatus needs to identify the context information of the terminal apparatus in the first information.

For other related content of the handover request message, refer to the foregoing descriptions of the first information. Details are not described again.

For Step 906, refer to the content of Step 606. Details are not described again.

Step 907: The relay network apparatus obtains the indication information of the first resource from the handover request message.

For Step 907, refer to the content of Step 607. Details are not described again.

Step 908: The relay network apparatus sends the handover request message.

Correspondingly, the first target network apparatus receives the handover request message.

For Step 908, refer to the content of Step 608. Details are not described again.

Step 909: The first target network apparatus performs admission control.

For Step 909, refer to the content of Step 609. Details are not described again.

Step 910: The first target network apparatus sends first handover response information.

Correspondingly, the relay network apparatus receives the first handover response information.

For Step 910, refer to the content of Step 610. Details are not described again.

Step 911: The relay network apparatus sends the first handover response information.

Correspondingly, the source network apparatus receives the first handover response information.

For Step 911, refer to the content of Step 611. Details are not described again.

Step 912: The source network apparatus sends a second RRC reconfiguration message to the terminal apparatus.

For Step 912, refer to the content of Step 612. Details are not described again.

Step 913: The source network apparatus sends second information.

Correspondingly, the relay network apparatus receives the second information.

For content of Step 913, refer to the related content of Step 613. Details are not described again.

Step 914: The relay network apparatus sends the second information on the first resource.

Correspondingly, the first target network apparatus receives the second information.

For content of Step 914, refer to the related content of Step 614. Details are not described again.

Step 915: The terminal apparatus accesses the first target network apparatus based on the second RRC reconfiguration message.

For content of Step 915, refer to the implementation provided in any one of Step 615, Step 616, Step 617, Step 618, and Step 619. Details are not described again.

Step 916: The source network apparatus sends fifth information to the terminal apparatus.

Correspondingly, the terminal apparatus receives the fifth information, where the fifth information indicates a relay network apparatus that stores the context information of the terminal apparatus. For example, the fifth information may include identification information of the relay network apparatus that stores the context information of the terminal apparatus.

Step 917: When the terminal apparatus determines that a communication failure occurs in an information transmission path between the terminal apparatus and the first target network apparatus, the terminal apparatus re-establishes a communication link between the terminal apparatus and at least one relay network apparatus based on the fifth information.

For example, in Step 917, when the terminal apparatus determines that the information transmission path between the terminal apparatus and the first target network apparatus is faulty, the terminal apparatus re-establishes an information transmission path between the terminal apparatus and the first target network apparatus based on the fifth information.

According to the method shown in FIG. 9A and FIG. 9B, the terminal apparatus may select the relay network apparatuses that store the context information of the terminal apparatus, and try to use these relay network apparatuses to re-establish a link. Because these relay network apparatuses have stored the context information of the terminal apparatus in advance, the new link can be re-established more quickly, thereby shortening a time of a communication failure.

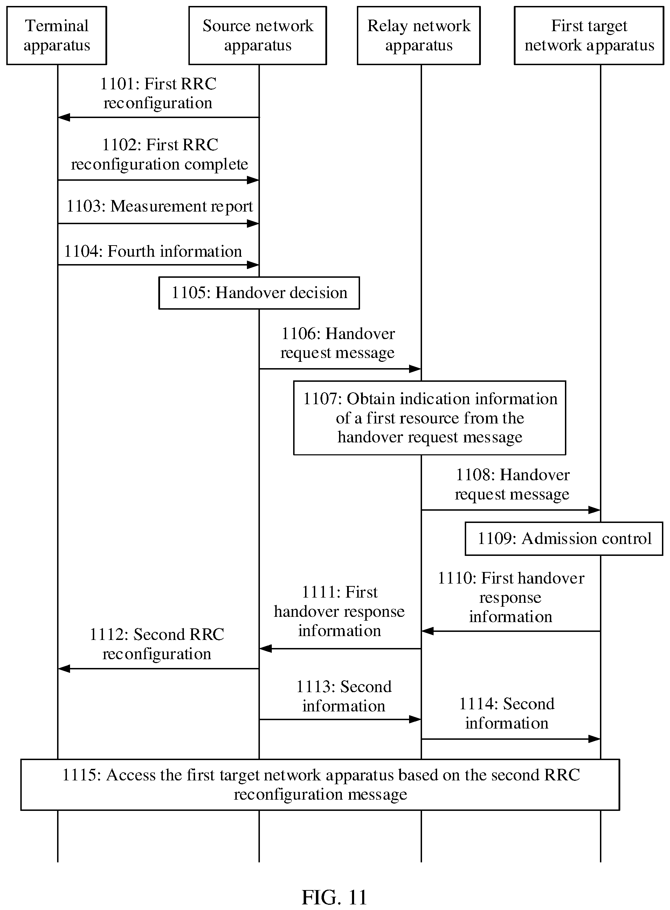

Based on the content shown in FIG. 2A, FIG. 2B, FIG. 3A, FIG. 3B, FIG. 4, FIG. 5, FIG. 6A, FIG. 6B, FIG. 7A, FIG. 7B, FIG. 8, FIG. 9A, FIG. 9B, and FIG. 10, and the foregoing other content, FIG. 11 illustrates a possible schematic flowchart of a communication method according to an embodiment of this application. A solution provided in FIG. 11 may be considered as an extended embodiment of the solutions provided in FIG. 4, FIG. 6A and FIG. 6B, FIG. 7A and FIG. 7B, and FIG. 9A and FIG. 9B. For execution bodies in FIG. 11, refer to the related descriptions in FIG. 4. Details are not described again. In the solution provided in FIG. 11, when the relay network apparatus finds that a communication failure occurs in an original path, the relay network apparatus may determine a new path, and transmit information to the first target network apparatus based on the new path. In this solution, because the relay network apparatus may determine a path, efficiency of information transmission between the source network apparatus and the first target network apparatus can be increased.

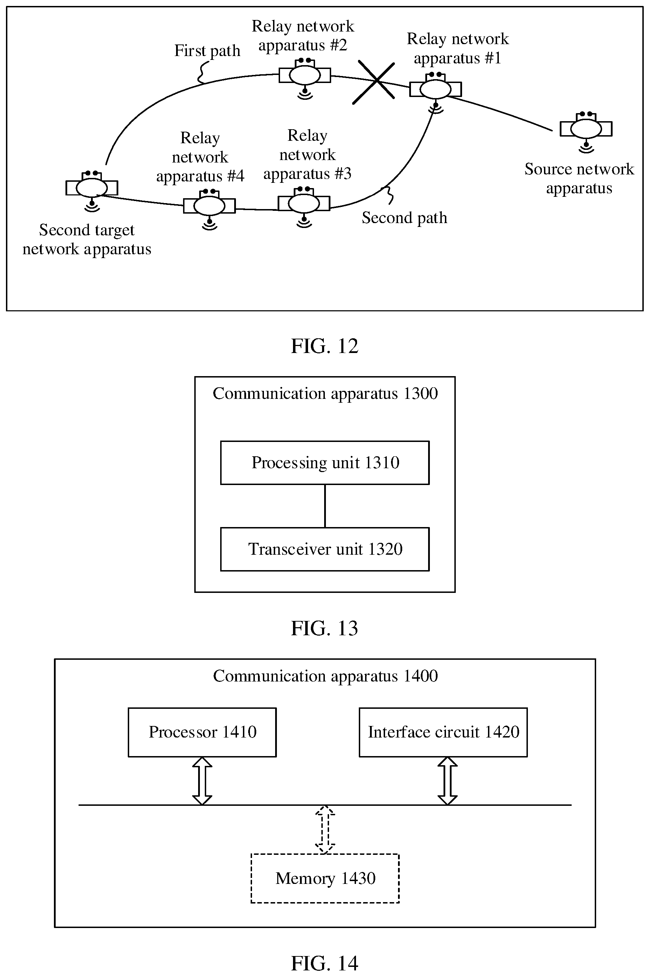

To facilitate understanding of the implementation solution provided in FIG. 11, FIG. 12 is an example of a diagram of an architecture of a communication system. As shown in FIG. 12, the communication system includes a source network apparatus, a first target network apparatus, and at least one relay network apparatus. As shown in FIG. 12, the communication system further includes a first path and a second path. When a communication failure occurs in the first path, the relay network apparatus (for example, a relay network apparatus #1) communicates with the first target network apparatus through the second path. The first path includes: the source network apparatus-the relay network apparatus #1-a relay network apparatus #2-the first target network apparatus. The second path includes: the source network apparatus-the relay network apparatus #1-a relay network apparatus #3-a relay network apparatus #4-the first target network apparatus. The relay network apparatus may be a satellite device, or may be a network apparatus deployed on the ground. In FIG. 12, a satellite device is used as an example for description.

The following provides descriptions with reference to FIG. 11 and FIG. 12.

Step 1101: The source network apparatus sends a first RRC reconfiguration message to the terminal apparatus.

For content of Step 1101, refer to Step 601. Details are not described again.

Step 1102: The terminal apparatus sends a first RRC reconfiguration complete message to the source network apparatus.

For content of Step 1102, refer to Step 602. Details are not described again.

Step 1103: The terminal apparatus performs measurement based on measurement configuration information, and sends a measurement report to the source network apparatus.

For content of Step 1103, refer to Step 603. Details are not described again.

Step 1104: The terminal apparatus sends fourth information to the source network apparatus.

Correspondingly, the source network apparatus receives the fourth information.

For content of Step 1104, refer to Step 604. Details are not described again.

Step 1105: The source network apparatus performs a handover decision based on the measurement report from the terminal apparatus.

For content of Step 1105, refer to Step 605. Details are not described again.

Step 1106: The source network apparatus sends a handover request (handover request) message.

Correspondingly, the relay network apparatus receives the handover request message.

The handover request message is used to request to hand over the terminal apparatus from the source network apparatus to the first target network apparatus. The handover request message may be an example of the foregoing first information. The handover request message may include indication information of a first resource.

For other related content of the handover request message, refer to the foregoing descriptions of the first information. Details are not described again.

For Step 1106, refer to the content of Step 606. Details are not described again.

Step 1107: The relay network apparatus obtains the indication information of the first resource from the handover request message.

For Step 1107, refer to the content of Step 607. Details are not described again.

Step 1108: The relay network apparatus sends the handover request message.

Correspondingly, the first target network apparatus receives the handover request message.

In Step 1108, the handover request message may further include information indicating a path. For example, in an implementation shown in FIG. 8, the handover request message sent by the source network apparatus further includes indication information of the first path. The relay network apparatus is the relay network apparatus #1 in FIG. 8. If the relay network apparatus #1 finds that the communication failure occurs in the first path, the relay network apparatus may determine the second path based on topology information, and send the handover request message to the first target network apparatus based on the second path, that is, send the handover request message to the relay network apparatus #3.

In another possible implementation, the handover request message sent by the relay network apparatus #3 may include information indicating the second path, for example, may include identification information of the relay network apparatus #4.

For Step 1108, refer to the content of Step 608. Details are not described again.

Step 1109: The first target network apparatus performs admission control.

For Step 1109, refer to the content of Step 609. Details are not described again.

Step 1110: The first target network apparatus sends first handover response information.

Correspondingly, the relay network apparatus receives the first handover response information.

In Step 1110, the first target network apparatus may send the first handover response information based on the second path. For example, the first handover response information may include the information indicating the second path, for example, may include the identification information of the relay network apparatus #4.

For Step 1110, refer to the content of Step 610. Details are not described again.

Step 1111: The relay network apparatus sends the first handover response information.

Correspondingly, the source network apparatus receives the first handover response information.

For Step 1111, refer to the content of Step 611. Details are not described again.

Step 1112: The source network apparatus sends a second RRC reconfiguration message to the terminal apparatus.

For Step 1112, refer to the content of Step 612. Details are not described again.

Step 1113: The source network apparatus sends second information.

Correspondingly, the relay network apparatus receives the second information.

In Step 1113, the source network apparatus may send the second information through the second path. The second information may include the information indicating the second path, for example, may include identification information of the relay network apparatus #1, or may include identification information of the second path.

For content of Step 1113, refer to the related content of Step 613. Details are not described again.

Step 1114: The relay network apparatus sends the second information on the first resource.

Correspondingly, the first target network apparatus receives the second information.

In Step 1114, for example, in the implementation shown in FIG. 8, the second information sent by the source network apparatus further includes indication information of the path #2. The relay network apparatus #1 sends the second information to the first target network apparatus based on the second path, that is, sends the second information to the relay network apparatus #3.

In another possible implementation, the second information sent by the relay network apparatus #3 may include the information indicating the second path, for example, may include the identification information of the relay network apparatus #4.

For content of Step 1114, refer to the related content of Step 614. Details are not described again.

Step 1115: The terminal apparatus accesses the first target network apparatus based on the second RRC reconfiguration message.

For content of Step 1115, refer to the implementation provided in any one of Step 615, Step 616, Step 617, Step 618, and Step 619. Details are not described again.

In the example provided in FIG. 11, the relay network apparatus detects that a communication failure occurs in a path in a process of transmitting the first information, and switches the path. In actual application, the relay network apparatus may also detect that a communication failure occurs in a path in a process of transmitting the second information, and then switch the path. For example, the first information is transmitted through the first path. However, when transmitting the second information, the relay network apparatus finds that a communication failure occurs in the first path, and then transmits the second information through the second path. A related solution is similar thereto. Details are not described again.

In the solution provided in FIG. 11, because the relay network apparatus also has a function of switching a path, this solution can accelerate a path switch speed and shorten duration of a communication failure.

It may be understood that, to implement the functions in the foregoing embodiments, the terminal apparatus, the source network apparatus, the relay network apparatus, and the first target network apparatus may include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on particular application scenarios and design constraints of the technical solutions.

FIG. 13 and FIG. 14 are diagrams of possible structures of communication apparatuses according to embodiments of this application. The communication apparatuses may be configured to implement a function of the terminal apparatus, the source network apparatus, the first target network apparatus, or the relay network apparatus in the foregoing method embodiments. Therefore, the communication apparatuses can also implement beneficial effect of the foregoing method embodiments. In embodiments of this application, the communication apparatus may be the terminal apparatus shown in FIG. 2A, FIG. 2B, FIG. 3A, or FIG. 3B, or may be the network device (for example, the RAN node) shown in FIG. 1A and FIG. 1B, or may be the satellite device shown in FIG. 1A and FIG. 1B, or may be a chip system applied to the terminal apparatus, the satellite device, or the network device shown in FIG. 2A, FIG. 2B, FIG. 3A, or FIG. 3B.

As shown in FIG. 13, a communication apparatus 1300 includes a processing unit 1310 and a transceiver unit 1320. The communication apparatus 1300 is configured to implement a function of the terminal apparatus, the source network apparatus, the relay network apparatus, or the first target network apparatus in the method embodiment shown in FIG. 4, FIG. 6A and FIG. 6B, FIG. 7A and FIG. 7B, FIG. 9A and FIG. 9B, or FIG. 11. The transceiver unit 1320 may also be referred to as a communication unit. The transceiver unit 1320 may include a sending unit and a receiving unit.

When the communication apparatus 1300 is configured to implement the function of the source network apparatus in the method embodiment shown in FIG. 4, FIG. 6A and FIG. 6B, FIG. 7A and FIG. 7B, FIG. 9A and FIG. 9B, or FIG. 11, the transceiver unit 1320 is configured to: send first information to the first target network apparatus, and send second information to the first target network apparatus, where the second information belongs to information associated with a handover process.

When the communication apparatus 1300 is configured to implement the function of the source network apparatus in the method embodiment shown in FIG. 4, FIG. 6A and FIG. 6B, FIG. 7A and FIG. 7B, FIG. 9A and FIG. 9B, or FIG. 11, in a possible implementation, the transceiver unit 1320 is configured to receive first handover response information from the first target network apparatus.

When the communication apparatus 1300 is configured to implement the function of the source network apparatus in the method embodiment shown in FIG. 4, FIG. 6A and FIG. 6B, FIG. 7A and FIG. 7B, FIG. 9A and FIG. 9B, or FIG. 11, in a possible implementation, the transceiver unit 1320 is configured to send third information to a second target network apparatus.

When the communication apparatus 1300 is configured to implement the function of the terminal apparatus in the method embodiment shown in FIG. 4, FIG. 6A and FIG. 6B, FIG. 7A and FIG. 7B, FIG. 9A and FIG. 9B, or FIG. 11, in a possible implementation, the processing unit 1310 is configured to obtain fourth information, and the transceiver unit 1320 is configured to send the fourth information to the source network apparatus.

When the communication apparatus 1300 is configured to implement the function of the terminal apparatus in the method embodiment shown in FIG. 4, FIG. 6A and FIG. 6B, FIG. 7A and FIG. 7B, FIG. 9A and FIG. 9B, or FIG. 11, in a possible implementation, the transceiver unit 1320 is configured to receive fifth information, and the processing unit 1310 is configured to determine, based on the fifth information, an information transmission path between the terminal apparatus and at least one relay network apparatus.

When the communication apparatus 1300 is configured to implement the function of the relay network apparatus in the method embodiment shown in FIG. 4, FIG. 6A and FIG. 6B, FIG. 7A and FIG. 7B, FIG. 9A and FIG. 9B, or FIG. 11, in a possible implementation, the transceiver unit 1320 is configured to receive first information from the source network apparatus. The processing unit 1310 is configured to obtain indication information of a first resource from the first information, and the transceiver unit 1320 is configured to: send the first information to the first target network apparatus, receive second information from the source network apparatus, and send the second information to the first target network apparatus on the first resource.

When the communication apparatus 1300 is configured to implement the function of the relay network apparatus in the method embodiment shown in FIG. 4, FIG. 6A and FIG. 6B, FIG. 7A and FIG. 7B, FIG. 9A and FIG. 9B, or FIG. 11, in a possible implementation, the transceiver unit 1320 is configured to: receive first handover response information from the first target network apparatus, and send the first handover response information to the source network apparatus.

When the communication apparatus 1300 is configured to implement the function of the relay network apparatus in the method embodiment shown in FIG. 4, FIG. 6A and FIG. 6B, FIG. 7A and FIG. 7B, FIG. 9A and FIG. 9B, or FIG. 11, in a possible implementation, the processing unit 1310 is configured to obtain indication information of the second resource from the first information. The transceiver unit 1320 is configured to: receive third information from the source network apparatus, and send the third information to a second target network apparatus on the second resource, where the third information belongs to information associated with a handover process.

When the communication apparatus 1300 is configured to implement the function of the relay network apparatus in the method embodiment shown in FIG. 4, FIG. 6A and FIG. 6B, FIG. 7A and FIG. 7B, FIG. 9A and FIG. 9B, or FIG. 11, in a possible implementation, the transceiver unit 1320 is configured to: receive second handover response information from the second target network apparatus, and send the second handover response information to the source network apparatus.

When the communication apparatus 1300 is configured to implement the function of the relay network apparatus in the method embodiment shown in FIG. 4, FIG. 6A and FIG. 6B, FIG. 7A and FIG. 7B, FIG. 9A and FIG. 9B, or FIG. 11, in a possible implementation, the processing unit 1310 is configured to obtain context information of the terminal apparatus from the first information.

When the communication apparatus 1300 is configured to implement the function of the relay network apparatus in the method embodiment shown in FIG. 4, FIG. 6A and FIG. 6B, FIG. 7A and FIG. 7B, FIG. 9A and FIG. 9B, or FIG. 11, in a possible implementation, the processing unit 1310 is configured to determine a second path when determining that a first path cannot be used to send the first information, and the transceiver unit 1320 is configured to send the first information to the first target network apparatus based on the second path.

When the communication apparatus 1300 is configured to implement the function of the first target network apparatus in the method embodiment shown in FIG. 4, FIG. 6A and FIG. 6B, FIG. 7A and FIG. 7B, FIG. 9A and FIG. 9B, or FIG. 11, in a possible implementation, the transceiver unit 1320 is configured to: receive first information from the source network apparatus, and receive second information from the source network apparatus, where the second information belongs to information associated with a handover process.

When the communication apparatus 1300 is configured to implement the function of the first target network apparatus in the method embodiment shown in FIG. 4, FIG. 6A and FIG. 6B, FIG. 7A and FIG. 7B, FIG. 9A and FIG. 9B, or FIG. 11, in a possible implementation, the transceiver unit 1320 is configured to send first handover response information to the source network apparatus.

For more detailed descriptions of the processing unit 1310 and the transceiver unit 1320, refer to the related descriptions in the method embodiment shown in FIG. 4, FIG. 6A and FIG. 6B, FIG. 7A and FIG. 7B, FIG. 9A and FIG. 9B, or FIG. 11.

As shown in FIG. 14, a communication apparatus 1400 includes a processor 1410 and an interface circuit 1420. The processor 1410 and the interface circuit 1420 are coupled to each other. It can be understood that the interface circuit 1420 may be a transceiver or an input/output interface. The input/output interface is configured to input and/or output information. Outputting may be understood as sending, and inputting may be understood as receiving. Optionally, the communication apparatus 1400 may further include a memory 1430, configured to: store instructions to be executed by the processor 1410, store input data required by the processor 1410 to run instructions, or store data generated by running instructions by the processor 1410.

When the communication apparatus 1400 is configured to implement the method shown in FIG. 4, FIG. 6A and FIG. 6B, FIG. 7A and FIG. 7B, FIG. 9A and FIG. 9B, or FIG. 11, the processor 1410 is configured to implement a function of the processing unit 1310, and the interface circuit 1420 is configured to implement a function of the transceiver unit 1320.

Based on a same concept, an embodiment of this application provides a computer-readable storage medium. The storage medium stores a computer program or instructions. When the computer program or the instructions are executed by a communication apparatus, the method in any embodiment of FIG. 4, FIG. 6A and FIG. 6B, FIG. 7A and FIG. 7B, FIG. 9A and FIG. 9B, or FIG. 11 can be implemented.

Based on a same concept, an embodiment of this application provides a computer program product. The computer program product stores a computer program, and the computer program includes program instructions. When the program instructions are executed by a computer, the method in any embodiment of FIG. 4, FIG. 6A and FIG. 6B, FIG. 7A and FIG. 7B, FIG. 9A and FIG. 9B, or FIG. 11 can be implemented.

When the foregoing communication apparatus is a chip used in a terminal, the chip in the terminal implements the function of the terminal apparatus in the foregoing method embodiments. That the chip in the terminal receives information from a base station may be understood as meaning that the information is first received by another module (for example, a radio frequency module or an antenna) in the terminal, and then sent by the module to the chip in the terminal. That the chip in the terminal sends information to a base station may be understood as meaning that the information is first sent to another module (for example, a radio frequency module or an antenna) in the terminal, and then sent by the module to the base station.

When the foregoing communication apparatus is a chip used in a base station, the chip in the base station implements the function of the network apparatus in the foregoing method embodiments. That the chip in the base station receives information from a terminal may be understood as meaning that the information is first received by another module (for example, a radio frequency module or an antenna) in the base station, and then sent by the module to the chip in the base station. That the chip in the base station sends information to a terminal may be understood as meaning that the information is first sent to another module (for example, a radio frequency module or an antenna) in the base station, and then sent by the module to the terminal.

In this application, that an entity A sends information to an entity B may be that A directly sends the information to B, or may be that A indirectly sends the information to B via another entity. Similarly, that the entity B receives the information from the entity A may be that the entity B directly receives the information sent by the entity A, or may be that the entity B indirectly receives the information sent by the entity A via another entity. The entities A and B herein each may be a RAN node or a terminal, or may be a module inside a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules inside an apparatus, for example, information exchange between a chip in a terminal and another module in the terminal, or information exchange between a chip in a base station and another module in the base station.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. The storage medium may alternatively be a component of the processor. The processor and the storage medium may be located in an ASIC. In addition, the ASIC may be located in a base station or a terminal. Certainly, the processor and the storage medium may alternatively exist in a base station or terminal as discrete components.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer program or the instructions are loaded and executed on a computer, all or a part of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape, or may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logical conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/Or" describes an association relationship between associated objects, and represents that three relationships may exist. For example, A and/or B may represent the following cases: Only A exists, both A and B exist, and only B exists, where A and B may be singular or plural. In the text descriptions of this application, a character "/" generally represents an "or" relationship between associated objects. In a formula in this application, the character "/" represents a "division" relationship between associated objects. "Including at least one of A, B, and C" may represent: including A; including B; including C; including A and B; including A and C; including B and C; and including A, B, and C.

It may be understood that various numbers (for example, digital numbers "first" and "second"; and for another example, letter numbers "implementation A1", "implementation B1", and "implementation C1") in embodiments of this application are merely used for distinguishing for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method is applicable to a source network apparatus, and the method comprises:
sending first information to a first target network apparatus, wherein the first information is used to request to hand over a terminal apparatus from the source network apparatus to the first target network apparatus, the first information comprises indication information of a first resource, an information transmission path from the source network apparatus to the first target network apparatus comprises at least one relay network apparatus, and the first resource is used by a relay network apparatus in the at least one relay network apparatus to transmit information associated with a handover process; and
sending second information to the first target network apparatus, wherein the second information belongs to the information associated with the handover process.

2. The method according to claim 1, wherein the indication information of the first resource comprises at least one of the following:
information indicating a time period;
information indicating a bandwidth resource;
information indicating a transmission rate;
information indicating a quality of service requirement;
information indicating quality of experience;
information indicating a location of the relay network apparatus;
information indicating a polarization manner; or
information indicating a bearer.

3. The method according to claim 1 or 2, wherein the first resource is used to transmit information associated with a handover process of a terminal apparatus of a first type; and
the terminal apparatus of the first type is associated with at least one of a priority of the terminal apparatus, a capability of the terminal apparatus, a quality of service requirement of the terminal apparatus, and quality of experience of the terminal apparatus.

4. The method according to any one of claims 1 to 3, wherein the information transmission path from the source network apparatus to the first target network apparatus comprises a plurality of relay network apparatuses, the first information comprises indication information of a plurality of first resources, the plurality of relay network apparatuses are associated with first resources in the plurality of first resources, and two first resources associated with two of the plurality of relay network apparatuses partially overlap or do not overlap.

5. The method according to any one of claims 1 to 4, wherein the first information further comprises: identification information of a relay network apparatus associated with the first resources in the plurality of first resources, identification information of the first target network apparatus, information about a path from the source network apparatus to the first target network apparatus, and information about a delay from the source network apparatus to the first target network apparatus.

6. The method according to any one of claims 1 to 5, wherein the first information comprises information indicating that a transmission mode of the relay network apparatus for the first information is a first transmission mode; and
the first transmission mode comprises: the relay network apparatus performs relay forwarding on the first information, and obtains the indication information of the first resource in the first information.

7. The method according to any one of claims 1 to 6, wherein the method further comprises:
receiving first handover response information from the first target network apparatus, wherein the first handover response information is response information of the first information, the first handover response information comprises information indicating that the transmission mode of the relay network apparatus is a second transmission mode, and the second transmission mode indicates that the relay network apparatus performs relay forwarding on the first handover response information.

8. The method according to any one of claims 1 to 7, wherein the second information further comprises the information indicating that the transmission mode of the relay network apparatus is the second transmission mode, and the second transmission mode indicates that the relay network apparatus performs relay forwarding on the second information.

9. The method according to any one of claims 1 to 8, wherein the second information comprises at least one of a handover acknowledgement, a sequence number SN status transfer, and a context of the terminal apparatus.

10. The method according to any one of claims 1 to 9, wherein the first information is further used to request to hand over the terminal apparatus from the source network apparatus to a second target network apparatus, the first information further comprises indication information of a second resource, and the second resource is used by the relay network apparatus in the at least one relay network apparatus to transmit the information associated with the handover process to the second target network apparatus.

11. The method according to claim 10, wherein the method further comprises:
sending third information to the second target network apparatus, wherein the third information belongs to the information associated with the handover process.

12. The method according to claim 10 or 11, wherein the first information further comprises: information indicating the second target network apparatus; information indicating an information transmission path from the source network apparatus to the second target network apparatus; and information indicating a relay network apparatus on the information transmission path from the source network apparatus to the second target network apparatus.

13. The method according to any one of claims 10 to 12, wherein the method further comprises:
receiving second handover response information from the second target network apparatus, wherein the second handover response information is response information of the first information, the second handover response information comprises the information indicating that the transmission mode of the relay network apparatus is the second transmission mode, and the second transmission mode indicates that the relay network apparatus performs relay forwarding on the second handover response information.

14. The method according to any one of claims 1 to 13, wherein the first information further comprises context information of the terminal apparatus; and
the first information further comprises information indicating that the relay network apparatus in the at least one relay network apparatus needs to obtain the context information of the terminal apparatus from the first information.

15. The method according to any one of claims 1 to 14, wherein the first resource is associated with at least one of the following: mobility interruption time information of the terminal apparatus; an uplink service arrival rate of the terminal apparatus; a downlink service arrival rate of the terminal apparatus; or a type of the terminal apparatus.

16. A communication method, wherein the method is applicable to a relay network apparatus, the relay network apparatus belongs to at least one relay network apparatus comprised on an information transmission path from a source network apparatus to a first target network apparatus, and the method comprises:
receiving first information from the source network apparatus, wherein the first information is used to request to hand over a terminal apparatus from the source network apparatus to the first target network apparatus, the first information comprises indication information of a first resource, and the first resource is used by the relay network apparatus to transmit information associated with a handover process;
obtaining the indication information of the first resource from the first information;
sending the first information to the first target network apparatus;
receiving second information from the source network apparatus, wherein the second information belongs to the information associated with the handover process; and
sending the second information to the first target network apparatus on the first resource.

17. The method according to claim 16, wherein the indication information of the first resource comprises at least one of the following:
information indicating a time period;
information indicating a bandwidth resource;
information indicating a transmission rate;
information indicating a quality of service requirement;
information indicating quality of experience;
information indicating a location;
information indicating a polarization manner; and
information indicating a bearer.

18. The method according to claim 16 or 17, wherein the first resource is used by the relay network apparatus to transmit information associated with a handover process of a terminal apparatus of a first type; and
the terminal apparatus of the first type is associated with at least one of a priority of the terminal apparatus, a capability of the terminal apparatus, a quality of service requirement of the terminal apparatus, and quality of experience of the terminal apparatus.

19. The method according to any one of claims 16 to 18, wherein the information transmission path from the source network apparatus to the first target network apparatus comprises a plurality of relay network apparatuses, the first information comprises indication information of a plurality of first resources, the plurality of relay network apparatuses are associated with first resources in the plurality of first resources, and two first resources associated with two of the plurality of relay network apparatuses partially overlap or do not overlap.

20. The method according to any one of claims 16 to 19, wherein the first information further comprises: identification information of the relay network apparatus, identification information of the first target network apparatus, information about a path from the source network apparatus to the first target network apparatus, and information about a delay from the source network apparatus to the first target network apparatus.

21. The method according to any one of claims 16 to 20, wherein the first information further comprises information indicating that a transmission mode of the relay network apparatus for the first information is a first transmission mode; and
the first transmission mode indicates that the relay network apparatus performs relay forwarding on the first information, and obtains the indication information of the first resource in the first information.

22. The method according to any one of claims 16 to 21, wherein the method further comprises:
receiving first handover response information from the first target network apparatus; and
sending the first handover response information to the source network apparatus, wherein the first handover response information is response information of the first information, the first handover response information comprises information indicating that the transmission mode of the relay network apparatus is a second transmission mode, and the second transmission mode indicates that the relay network apparatus performs relay forwarding on the first handover response information.

23. The method according to any one of claims 16 to 22, wherein the second information further comprises the information indicating that the transmission mode of the relay network apparatus is the second transmission mode, and the second transmission mode indicates that the relay network apparatus performs relay forwarding on the second information.

24. The method according to any one of claims 16 to 23, wherein the second information comprises at least one of a handover acknowledgement, a sequence number SN status transfer, and a context of the terminal apparatus.

25. The method according to any one of claims 16 to 24, wherein the first information is further used to request to hand over the terminal apparatus from the source network apparatus to a second target network apparatus, the first information further comprises indication information of a second resource, and the second resource is used by the relay network apparatus to transmit the information associated with the handover process to the second target network apparatus.

26. The method according to claim 25, wherein the first information further comprises: information indicating the second target network apparatus; information indicating an information transmission path from the source network apparatus to the second target network apparatus; and information indicating a relay network apparatus on the information transmission path from the source network apparatus to the second target network apparatus.

27. The method according to claim 25 or 26, wherein the method further comprises:
receiving second handover response information from the second target network apparatus, wherein the second handover response information is response information of the first information, the second handover response information comprises the information indicating that the transmission mode of the relay network apparatus is the second transmission mode, and the second transmission mode indicates that the relay network apparatus performs relay forwarding on the second handover response information; and
sending the second handover response information to the source network apparatus.

28. The method according to any one of claims 16 to 27, wherein the first information further comprises context information of the terminal apparatus; and
the first information further comprises information indicating that the relay network apparatus needs to obtain the context information of the terminal apparatus from the first information; and
the method further comprises:
obtaining the context information of the terminal apparatus from the first information.

29. The method according to any one of claims 16 to 28, wherein the first resource is associated with at least one of the following: mobility interruption time information of the terminal apparatus; an uplink service arrival rate of the terminal apparatus; a downlink service arrival rate of the terminal apparatus; or a type of the terminal apparatus.

30. The method according to any one of claims 16 to 29, wherein sending the first information to the first target network apparatus comprises:
when determining that a first path cannot be used to send the first information, determining a second path; and
sending the first information to the first target network apparatus based on the second path.

31. A communication method, wherein the method is applicable to a terminal apparatus, and the method comprises:
obtaining fourth information, wherein the fourth information comprises at least one of a priority of the terminal apparatus, a capability of the terminal apparatus, a quality of service requirement of the terminal apparatus, and quality of experience of the terminal apparatus; and
sending the fourth information to a source network apparatus, wherein the fourth information is used by the source network apparatus to determine a first resource, an information transmission path from the source network apparatus to a first target network apparatus comprises at least one relay network apparatus, and the first resource is used by a relay network apparatus in the at least one relay network apparatus to transmit information associated with a handover process.

32. The method according to claim 31, wherein indication information of the first resource comprises at least one of the following:
information indicating a time period;
information indicating a bandwidth resource;
information indicating a transmission rate;
information indicating a quality of service requirement;
information indicating quality of experience;
information indicating a location; and
information indicating a polarization manner.

33. The method according to claim 31 or 32, wherein the first resource is used to transmit information associated with a handover process of a terminal apparatus of a first type; and
the terminal apparatus of the first type is associated with at least one of the priority of the terminal apparatus, the capability of the terminal apparatus, the quality of service requirement of the terminal apparatus, or the quality of experience of the terminal apparatus.

34. The method according to any one of claims 31 to 33, wherein the method further comprises:
receiving fifth information, wherein the fifth information indicates a relay network apparatus that stores context information of the terminal apparatus; and
determining, based on the fifth information, an information transmission path between the terminal apparatus and the at least one relay network apparatus.

35. A communication method, wherein the method is applicable to a first target network apparatus, and the method comprises:
receiving first information, wherein the first information is used to request to hand over a terminal apparatus from a source network apparatus to the first target network apparatus, the first information comprises indication information of a first resource, an information transmission path from the source network apparatus to the first target network apparatus comprises at least one relay network apparatus, and the first resource is used by a relay network apparatus in the at least one relay network apparatus to transmit information associated with a handover process; and
receiving second information, wherein the second information belongs to the information associated with the handover process.

36. The method according to claim 35, wherein the indication information of the first resource comprises at least one of the following:
information indicating a time period;
information indicating a bandwidth resource;
information indicating a transmission rate;
information indicating a quality of service requirement;
information indicating quality of experience;
information indicating a location of the relay network apparatus;
information indicating a polarization manner; or
information indicating a bearer.

37. The method according to claim 35 or 36, wherein the first resource is used to transmit information associated with a handover process of a terminal apparatus of a first type; and
the terminal apparatus of the first type is associated with at least one of a priority of the terminal apparatus, a capability of the terminal apparatus, a quality of service requirement of the terminal apparatus, or quality of experience of the terminal apparatus.

38. The method according to any one of claims 35 to 37, wherein the information transmission path from the source network apparatus to the first target network apparatus comprises a plurality of relay network apparatuses, the first information comprises indication information of a plurality of first resources, the plurality of relay network apparatuses are associated with first resources in the plurality of first resources, and two first resources associated with two of the plurality of relay network apparatuses partially overlap or do not overlap.

39. The method according to any one of claims 35 to 38, wherein the first information further comprises: identification information of a relay network apparatus associated with the first resources in the plurality of first resources, identification information of the first target network apparatus, information about a path from the source network apparatus to the first target network apparatus, and information about a delay from the source network apparatus to the first target network apparatus.

40. The method according to any one of claims 35 to 39, wherein the first information comprises information indicating that a transmission mode of the relay network apparatus for the first information is a first transmission mode; and
the first transmission mode comprises: the relay network apparatus performs relay forwarding on the first information, and obtains the indication information of the first resource in the first information.

41. The method according to any one of claims 35 to 40, wherein the method further comprises:
sending first handover response information, wherein the first handover response information is response information of the first information, the first handover response information comprises information indicating that the transmission mode of the relay network apparatus is a second transmission mode, and the second transmission mode indicates that the relay network apparatus performs relay forwarding on the first handover response information.

42. The method according to any one of claims 35 to 41, wherein the second information further comprises the information indicating that the transmission mode of the relay network apparatus is the second transmission mode, and the second transmission mode indicates that the relay network apparatus performs relay forwarding on the second information.

43. The method according to any one of claims 35 to 42, wherein the second information comprises at least one of a handover acknowledgement, a sequence number SN status transfer, or a context of the terminal apparatus.

44. The method according to any one of claims 35 to 43, wherein the first information further comprises context information of the terminal apparatus; and
the first information further comprises information indicating that the relay network apparatus in the at least one relay network apparatus needs to obtain the context information of the terminal apparatus from the first information.

45. The method according to any one of claims 35 to 44, wherein the first resource is associated with at least one of the following: mobility interruption time information of the terminal apparatus; an uplink service arrival rate of the terminal apparatus; a downlink service arrival rate of the terminal apparatus; or a type of the terminal apparatus.

46. A communication apparatus, comprising a module configured to perform the method according to any one of claims 1 to 45.

47. A communication apparatus, comprising at least one processor and an interface circuit, wherein the interface circuit is configured to: receive a signal from another communication apparatus and transmit the signal to the at least one processor, or send a signal from the at least one processor to another communication apparatus, and the at least one processor is configured to implement the method according to any one of claims 1 to 45 by using a logic circuit or executing code instructions.

48. A communication apparatus, comprising at least one processor, wherein the at least one processor is configured to implement the method according to any one of claims 1 to 45 by using a logic circuit or executing code instructions.

49. A computer-readable storage medium, wherein the storage medium stores a computer program or instructions, and when the computer program or the instructions are executed by a communication apparatus, the method according to any one of claims 1 to 45 is implemented.

50. A computer program product, wherein the computer program product stores a computer program, the computer program comprises program instructions, and when the program instructions are executed by a computer, the computer is enabled to perform the method according to any one of claims 1 to 45.
